# EUROPÄISCHE PATENTSCHRIFT

(11) **EP 3 155 041 B1**
(45) Veröffentlichungstag und Bekanntmachung des Hinweises auf die Patenterteilung: **21.03.2018**
(21) Anmeldenummer: 15727343.4
(22) Anmeldetag: 28.05.2015
(51) Int. Cl.: C08K 5/00, C08K 5/3447, C08K 5/3475

(54) **VERWENDUNG VON HYDROXYBENZOTRIAZOL-DERIVATEN UND/ODER HYDROXY-INDAZOL-DERIVATEN ALS FLAMMSCHUTZMITTEL FÜR KUNSTSTOFFE SOWIE FLAMMGESCHÜTZTE KUNSTSTOFFFORMMASSE**
USE OF HYDROXYBENZOTRIAZOLE DERIVATIVES AND/OR HYDROXY INDAZOLE DERIVATIVES AS FLAME RETARDANTS FOR PLASTICS AND FLAMEPROOF PLASTIC MOULDED BODIES
UTILISATION DE DÉRIVÉS DE N-HYDROXYBENZOTRIAZOLE ET/OU DE DÉRIVÉS DE N-HYDROXY-INDAZOLES COMME AGENT IGNIFUGE POUR MATIÈRES PLASTIQUES ET ÉGALEMENT MATIÈRE PLASTIQUE DE MOULAGE IGNIFUGÉE

(30) Priorität: 12.06.2014 DE 102014211276
(43) Veröffentlichungstag der Anmeldung: 19.04.2017
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); MAZUROWSKI, Markus, 65462 Ginsheim-Gustavsburg (DE)
(74) Vertreter: Pfenning, Meinig & Partner mbB
(86) Internationale Anmeldenummer: PCT/EP2015/061771
(87) Internationale Veröffentlichungsnummer: WO 2015/189034

(56) Entgegenhaltungen:
- DE-A1- 10 022 946

## Beschreibung

Die vorliegende Erfindung betrifft die Verwendung von N-Hydroxy-Benzotriazol-Derivaten, insbesondere N-Hydroxy-Benzotriazol-Salzen und/oder N-Hydroxy-Indazolen, insbesondere N-Hydroxy-Indazol-Salzen als Flammschutzmittel für Kunststoffe. Die vorliegende Erfindung betrifft zudem eine flammgeschützte Kunststoffformmasse, die N-Hydroxy-BenzotriazolDerivate und/oder N-Hydroxy-Indazol-Derivate als Flammschutzmittel beinhaltet.

Die meisten Kunststoffe, wie z. B. Kunststoffe auf der Basis von Polyolefinen, Polystyrol, Polyamiden, Polyurethanen oder Polyestern, sind brennbar und vergleichsweise leicht entflammbar. Um das Brandrisiko von Kunststoffen in bestimmten Anwendungen zu vermindern oder auszuschließen, ist es deshalb zwingend erforderlich die Entflammbarkeit zu verringern und flammfeste oder flammgeschützte Kunststoffzusammensetzungen einzusetzen. Dazu werden in der Regel Flammschutzmittel dem Kunststoff beigegeben mit dem Ziel, das Entzünden für eine bestimmte Zeit zu verhindern oder die Brandausbreitung signifikant zu verzögern. Traditionelle Flammschutzmittel basieren auf chlorund bromhaltigen Verbindungen (meist in Kombination mit Antimontrioxid), auf phosphorhaltigen, auf stickstoffhaltigen Verbindungen und/oder auf anorganischen Hydroxiden. In neuerer Zeit werden aus Umweltgründen und/oder toxikologischen Aspekten halogenfreie Flammschutzlösungen bevorzugt.

Zur Herstellung von flammgeschützten Kunststoffen gibt es eine Vielzahl von Flammschutzmitteln, die in der Regel substratspezifisch für ein bestimmtes Polymer und einen bestimmten Einsatzbereich entsprechend den dafür zugrundeliegenden nationalen und internationalen Normen eingesetzt werden. Flammgeschützte Kunststoffe werden beispielsweise in Elektro- und Elektronikanwendungen, im Transport/Automobilbereich, in Textilien, in Polstermöbeln und im Bauwesen eingesetzt.

Eine in den letzten Jahren entwickelte sehr wirksame Flammschutzmittelklasse auf Stickstoffbasis,vorzugsweise für Polyolefine, beruht auf Alkoxyaminen (WO 99/00450, WO 2008101845, WO 2011086114). Durch Bindungsspaltung der Alkoxyamine entstehen im Brandfall Radikale, die in den Abbauprozess des Polymeren eingreifen und damit die Flammschutzwirkung bewirken (C. R. Wilen, R. Pfaendner, J. Appl. Pol. Sci. 129 (2013), 925-944, R. Pfaendner, C.R. Chimie 9 (2006), 1338-1344). Die Alkoxyamine können auch vorteilhaft in synergistischen Kombinationen mit anderen Flammschutzmitteln eingesetzt werden (WO 02/074847, WO 03/016388, WO 2010026230, WO 2009080554, WO 2011003773, WO 2011117266). Weiterhin wurde gefunden, dass auch Hydroxylamin-Stabilisatoren eine synergistische Verbesserung der Wirkung von bromhaltigen, phosphorhaltigen und anorganischen Flammschutzmitteln bewirken können (WO 02/074847).

Viele der bekannten und genannten Radikalgeneratoren erfüllen jedoch nicht alle Forderungen für ein wirksames Flammschutzmittel wie z.B. eine ausreichende thermische Stabilität, d.h. bei der Einarbeitung in Kunststoffe (Compoundierung) bei üblichen Temperaturen tritt bereits verfrühter, d.h. unerwünschter Abbau des Flammschutzmittels auf. Durch diesen vorzeitigen Abbau werden die Wirkung im Brandfall verringert und/oder durch Folgereaktionen die Eigenschaften des zu schützenden Kunststoffs negativ beeinflusst. Es besteht daher der Wunsch nach Radikalgeneratoren, die als Flammschutzmittel oder Flammschutzmittelsynergist eingesetzt werden können, die bei der Kunststoffverarbeitung eine ausreichend hohe Temperaturstabilität besitzen, d.h. in der Regel oberhalb von 300°C, im Brandfall aber dann durch eine schnelle Zersetzung eine besonders gute Wirkung erreichen.

Aufgabe der vorliegenden Erfindung war es daher neue Flammschutzmittel und synergistische Flammschutzmittel-Komponenten zur Verfügung zu stellen, die hochwirksam sind und sehr gute thermische Stabilitäten aufweisen.

Diese Aufgabe wird hinsichtlich der Verwendung von bestimmten N-Hydroxytriazolen und/oder N-Hydroxy-Indazolen als Flammschutzmittel für Kunststoffe mit den Merkmalen des Patentanspruchs 1 gelöst. Zudem betrifft die vorliegende Erfindung gemäß Patentanspruch 7 eine flammgeschützte Kunststoffformmasse, die zumindest ein N-Hydroxy-Benzotriazol und/oder zumindest ein N-Hydroxy-Indazol als Flammschutzmittel beinhaltet. Die jeweiligen abhängigen Patentansprüche stellen dabei vorteilhafte Weiterbildungen dar.

Hydroxybenzotriazol ist ein industriell verfügbarer Rohstoff, der z.B. für die Peptidsynthese eingesetzt wird (B. Bacsa et al., J. Org. Chem. 2008, 73, 7532-7542). Allerdings ist Hydroxybenzotriazol im trockenen Zustand explosiv und schlagempfindlich, wird daher in wässriger Lösung bzw. feucht gelagert und kann damit üblicherweise nicht für Kunststoffverarbeitungsprozesse insbesondere bei den erforderlichen Verarbeitungstemperaturen eingesetzt werden. Dagegen sind die Salze von Hydroxybenzotriazol thermisch sehr stabile Verbindungen und zerfallen in der Regel erst oberhalb von 300°C.

Benzotriazolderivate allgemein sind eine der bekanntesten Klassen von UV-Stabilisatoren, diese sind allerdings strukturell unterschiedlich (keine Hydroxybenzotriazole und keine Salze, siehe z.B. Plastics Additives Handbook, 5th Edition, Herausgeber: H. Zweifel, Hanser, München 2001) und haben damit keine Wirkung als Flammschutzmittel und/oder Flammschutzmittelsynergist.

Die Verwendung von Salzen von Hydroxybenzotriazol in Kunststoffen und insbesondere als Flammschutzmittel ist bisher nicht bekannt.

Überraschenderweise hat sich nunmehr herausgestellt, dass sich N-Hydroxy-Benzotriazol-Derivate und/oder N-Hydroxy-Indazol-Derivate hervorragend als Flammschutzmittel für Kunststoffzusammensetzungen eignen.

Die Erfindung betrifft somit die Verwendung einer Verbindung gemäß den allgemeinen Formeln I bis IV 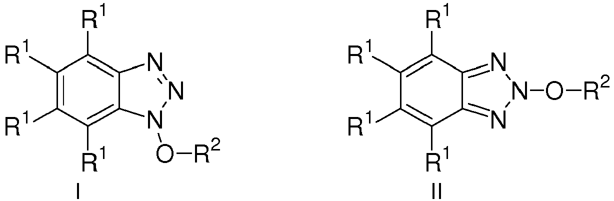 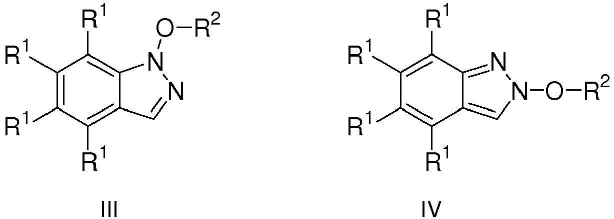 oder eines Gemisches von mindestens zwei Verbindungen der allgemeinen Formeln I bis IV, wobei bei jedem Auftreten jeweils unabhängig voneinander
- R¹: ausgewählt ist aus der Gruppe bestehend aus Wasserstoff, Alkylresten mit 1 bis 18 Kohlenstoffatomen, teilweise oder perfluorierten Alkylresten mit 1 bis 18 Kohlenstoffatomen, ungesättigten organischen Resten bis 1 bis 18 Kohlenstoffatomen, wobei zwei vicinale Reste R¹ auch zu einem Ring verbunden sein können, -NO₂ -F, -Cl und -Br, und
- R²: ausgewählt ist aus der Gruppe bestehend aus ein-, zwei- oder dreiwertigen anorganischen oder organischen Kationen und Wasserstoff,
als Flammschutzmittel für Kunststoffe.

Bei den oben genannten Verbindungen gemäß den allgemeinen Formeln I bis IV ist es dabei jeweils bevorzugt, wenn R¹ ausgewählt ist aus Wasserstoff und R² ausgewählt ist aus 1- oder 2-wertigen anorganischen oder organischen Kationen.

Unter den Verbindungen gemäß den Formeln I bis IV ist die Verbindung gemäß Formel I insbesondere bevorzugt.

Gemäß einer bevorzugten Ausführungsform sind die ein-, zwei- oder dreiwertigen anorganischen Kationen ausgewählt aus der Gruppe bestehend aus Li⁺, Na⁺, K⁺, ½ Mg²⁺, ½ Ca, 1/3 Al³⁺, ½ Zn²⁺ und/oder die oder organischen Kationen ausgewählt sind aus der Gruppe bestehend aus Stickstoff- und/oder Phosphor-haltigen organischen Kationen, insbesondere Ammonium, Melaminium und Phosphonium.

Die oben verwendete Nomenklatur bei den 2- oder 3-wertigen Kationen (z.B. ½ Mg²⁺ etc.) deutet an, dass das Kation selbstverständlich in korrektem stöchiometrischem Verhältnis hinsichtlich des einwertigen Anions gemäß den Formeln I bis IV vorliegt.

Insbesondere ist es vorteilhaft, wenn bei jedem Auftreten R¹ Wasserstoff ist und/oder R² ein ein- oder zweiwertiges anorganisches Kation, insbesondere K⁺ ist.

Hinsichtlich des zu schützendes Kunststoffes, der durch Einsatz der oben genannten Verbindungen gemäß in Formeln I bis IV flammgeschützt ausgestattet werden kann, unterliegt die vorliegende Erfindung keinerlei Beschränkung. Bevorzugt sind die zu schützenden Kunststoffe dabei allerdings ausgewählt aus der Gruppe bestehend aus thermoplastischen Kunststoffen, Elastomeren oder duroplastischen Kunststoffen, insbesondere
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (Ionomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrolacrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat Polyacrylnitril, Polyacrylamide, Copolymere wie z.B. Polyacrylnitril-Polyalkylacrylat,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, Blends von unterschiedlichen Polyamiden wie z.B. PA-6 und PA 6.6 bzw. Blends von Polyamiden und Polyolefinen wie z.B. PA/PP,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV),
m) Polycarbonate, Polyestercarbonate, sowie Blends wie z.B. PC/ABS, PC/PBT, PC/PET/PBT, PC/PA,
n) Cellulosederivate wie z.B. Cellulosenitrat, Celluloseacetat, Cellulosepropionat, Cellulosebutyrat
o) nicht-thermoplastischen oder duroplastischen Kunststoffen
p) sowie Mischungen, Kombinationen oder Blends aus zwei oder mehr der zuvor genannten Polymere.

Die Verwendung der Verbindungen gemäß den allgemeinen Formeln I bis IV bzw. eines Gemisches aus mindestens zwei Verbindungen der Formeln I bis IV besteht bevorzugt darin, dass die entsprechenden Verbindungen dem Kunststoff zugemischt werden. Hierbei ist es vorteilhaft, dass der Gesamtgehalt der Verbindung gemäß den allgemeinen Formeln I und II im entstehenden Gemisch insbesondere 0,01 bis 50 Gew.-%, bevorzugt 0,05 bis 25 Gew.-%, beträgt.

Zudem betrifft die vorliegende Erfindung eine flammgeschützte Kunststoffformmasse enthaltend mindestens einen Kunststoff sowie als Flammschutzmittel mindestens eine Verbindung gemäß den allgemeinen Formeln I bis IV oder eines Gemisches von mindestens zwei Verbindungen der allgemeinen Formeln I bis IV, wobei bei jedem Auftreten jeweils unabhängig voneinander
- R¹: ausgewählt ist aus der Gruppe bestehend aus Wasserstoff, Alkylresten mit 1 bis 18 Kohlenstoffatomen, teilweise oder perfluorierten Alkylresten mit 1 bis 18 Kohlenstoffatomen, ungesättigten organischen Resten bis 1 bis 18 Kohlenstoffatomen, wobei zwei vicinale Reste R¹ auch zu einem Ring verbunden sein können, -NO₂ -F, -Cl und -Br, und
- R²: ausgewählt ist aus der Gruppe bestehend aus ein-, zwei- oder dreiwertigen anorganischen oder organischen Kationen und Wasserstoff.

Hinsichtlich der bevorzugten Auswahl der Verbindungen I bis IV gelten die gleichen Ausführungen wie bereits obenstehend beschrieben.

Gemäß einer bevorzugten Ausführungsform beträgt der Gesamtgehalt der mindestens einen Verbindung gemäß den allgemeinen Formeln I bis IV in der Kunststoffformmasse 0,01 bis 50 Gew.-%, bevorzugt 0,05 bis 25 Gew.-%.

Weiter vorteilhaft ist dabei, dass die Kunststoffformmasse neben der mindestens einen Verbindung gemäß den allgemeinen Formeln I bis IV und dem mindestens einen Kunststoff zusätzlich bis zu 70 Gew.-Teile, bevorzugt bis zu 25 Gew.-Teile, bezogen auf die Gesamtheit der mindestens einen Verbindung gemäß den allgemeinen Formeln I und II und des mindestens einen Kunststoffs, mindestens ein weiteres Flammschutzmittel, ausgewählt aus der Gruppe bestehend aus phosphorhaltigen, stickstoffhaltigen, anorganischen, siliciumhaltigen, borhaltigen, halogenhaltigen, schwefelhaltigen und/oder radikalbildenden Flammschutzmitteln enthält.

Sofern es sich bei den unter a) bis o) angegebenen Polymeren oder Mischungen bzw. Blends aus zwei oder mehreren dieser Polymere um Copolymere handelt, können diese in Form von statistischen ("random"), Block- oder "tapered" Strukturen vorliegen.

Sofern es sich bei den unter a) bis o) angegebenen Polymeren oder Mischungen bzw. Blends aus zwei oder mehreren dieser Polymere um stereoreguläre Polymere handelt, können diese in Form von isotaktischen, stereotaktischen, aber auch ataktischen Formen vorliegen.

Weiterhin können die unter a) bis o) angegebenen Polymere oder Mischungen bzw. Blends aus zwei oder mehreren dieser Polymere sowohl amorphe als auch (teil-)kristalline Morphologien aufweisen.

Die genannten Polymeren a) bis o) können dabei nicht nur als Neuware sondern auch in Form von Rezyklaten vorliegen, z.B. als Produktionsabfälle oder aus Wertstoffsammlungen ("post-consumer" Rezyklate).

Ggf. können die unter a) genannten Polyolefine auch vernetzt vorliegen, z.B. vernetztes Polyethylen, das dann als X-PE bezeichnet wird. Die unter a) genannten Polyolefine können beliebige Stereostrukturen aufweisen, d.h. isotaktisch, syndiotaktisch oder ataktisch oder in Stereoblockstrukturen vorliegen.

Ganz besonders bevorzugt werden die erfindungsgemäß verwendeten organischen Oxyimide für Polyolefine, insbesondere für die unter a) genannten Polyolefine, eingesetzt.

Darüber hinaus können die vorliegenden Flammschutzmittel in den folgenden duromeren oder elastomeren, nicht-thermoplastischen Kunststoffen Verwendung finden:
q) Epoxidharze, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
r) Phenolharze wie z.B. Phenol-Formaldehyd-Harze, Harnstoff-Formaldehyd-Harze, Melamin-Formaldehydharze,
s) ungesättigte Polyesterharze aus ungesättigten Dicarbonsäuren und Diolen,
t) Silikone,
u) Polyurethane als Reaktionsprodukte aus di- oder polyfunktionellen Isocyanaten und Polyolen, Polyharnstoffe,
v) Alkydharze, Allylharze.

Ebenso möglich sind Mischungen, Blends und Kombinationen der zuvor genannten Kunststoffe untereinander oder Mischungen und Kombinationen mit den zuvor unter a) bis o) angesprochenen Kunststoffen.

Ganz besonders bevorzugt werden die erfindungsgemäßen Flammschutzmittel bei Polyolefinen, vorzugsweise Polypropylen und/oder Polyethylen und deren Copolymeren und Blends eingesetzt.

Insbesondere ist es bevorzugt, wenn die erfindungsgemäß eingesetzten Flammschutzmittel gemäß den Formeln I bis IV in Kombination mit mindestens einem weiteren Flammschutzmittel eingesetzt werden, wodurch sich synergistische Effekte ergeben. Das mindestens eine weitere Flammschutzmittel ist dabei bevorzugt ausgewählt aus der Gruppe bestehend aus
a) anorganischen Flammschutzmitteln wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmitteln wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melaminmethanphosphonat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Ethylendiaminmethanphosphonat, Poly-[2,4-(piperazin-1,4-yl)-6-(morpholin-4-yl)-1,3,5-triazin], Ammoniumpolyphosphat, Melaminborat, Melaminhydrobromid,
c) Radikalbildnern, wie z.B. Alkoxyamine, Hydroxylaminester, Azoverbindungen, Dicumyl oder Polycumyl, Hydroxyimide oder deren Derivate wie z.B. Hydroxyimidester oder Hydroxyimidether.
d) Phosphorhaltigen Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Aluminiumphosphat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltigen Flammschutzmitteln auf Chlor- und Brombasis wie z.B. polybrominierte Diphenyloxide, wie z.B. Decabromdiphenyloxid, Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen-bis(tetrabromophthalimid), Tetrabromo-bisphenol A, Tetrabromobisphenol-A-bis(2,3-dibromopropylether), bromiertes Polystyrol, bromiertes Polybutadien bzw. Polystyrol, bromiertes Polybutadien-Copolymere, bromiertes Epoxidharz, Polypentabrombenzylacrylat, bromierter Polyphenylenether, ggf. in Kombination mit Sb₂O₃ und/oder Sb₂O₅,
f) Boraten wie z.B. Zinkborat oder Calciumborat, ggf. auf Trägermaterialien wie Silica,
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) siliciumhaltigen Verbindungen wie z.B. Polyphenylsiloxane,
j) Kohlenstoffmodifikationen wie z.B Kohlenstoff-Nanoröhren (CNT) oder Graphen.

Bei den unter e) genannten halogenhaltigen Flammschutzmitteln handelt es sich häufig um kommerzielle Produkte, die z.B. von den Firmen Albemarle, Chemtura/Great Lakes oder ICL-IP im Handel erhältlich sind.

Insbesondere bei Kombinationen der erfindungsgemäß verwendeten Verbindungen gemäß Formeln I bis IV mit mindestens einem Radikalbildner als weiteres Flammschutzmittel ergeben sich synergistische Effekte.

Radikalbildner im Sinne der vorliegenden Erfindung sind Verbindungen, die durch thermische und Licht-induzierte Spaltung Radikale erzeugen können. Geeignete Radikalbildner für die hier vorliegenden Anwendungen sind solche, die für die Kunststoff- oder Beschichtungs-Verarbeitungsprozesse eine ausreichende thermische Stabilität aufweisen, d.h. bei der Verarbeitung noch keine oder nur sehr geringe Mengen an Radikalen bilden und erst bei höheren Temperaturen, wie sie erst im Brandfall auftreten, spontan Radikale erzeugen. Die jeweiligen Verarbeitungsprozesse und Temperaturen für Beschichtungen und Kunststoff-Verarbeitungsprozesse sind dem Fachmann bekannt. Kunststoff-Verarbeitungsprozesse und dazugehörige Temperaturen können aber auch der Fachliteratur entnommen werden wie z.B. H. Domininghaus, P. Elsner, P. Eyerer. T. Hirth, Kunststoffe , 8. Auflage, Springer 2012.

Der Radikalbildner ist dabei bevorzugt ausgewählt aus der Gruppe bestehend aus N-Alkoxyaminen, -C-C- Radikalbildnern, Radikalbildnern mit Azogruppen (-N=N-), Radikalbildnern mit Hydrazingruppen (-NH-HN-), Radikalbildnern mit Hydrazongruppen (>C=N-NH-), Radikalbildnern mit Azingruppen (>C=N-N=C<), Radikalbildnern mit Triazengruppen (-N=N-N<).

Die Herstellung geeigneter Azoverbindungen ist beispielsweise in M. Aubert et. al. Macromol. Sci. Eng. 2007, 292, 707-714 oder in WO 2008101845, die Herstellung von Hydrazonen und Azinen in M. Aubert et al., Pol. Adv. Technol. 2011, 22, 1529-1538, die Herstellung von Triazenen in W. Pawelec et al., Pol. Degr. Stab. 2012, 97, 948-954 beschrieben.

Der Radikalbildner ist dabei besonders bevorzugt ausgewählt aus der Gruppe bestehend aus
a) N-Alkoxyaminen gemäß der nachfolgend abgebildeten Strukturformel 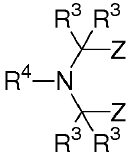 wobei
   - R³: für Wasserstoff oder einen gegebenenfalls substituierter Alkyl-, Cycloalkyl-, Aryl-, Heteroaryl- oder Acyl-Rest steht, insbesondere ein C1 bis C4-Alkylrest ist,
   - R⁴: für einen Alkoxy-, Aryloxy-, Cycloalkoxy-, Aralkoxy- oder Acyloxy-Rest steht,
   - Z: für Wasserstoff oder einen gegebenenfalls substituierter Alkyl-, Cycloalkyl-, Aryl-, Heteroaryl- oder Acyl-Rest steht, wobei die beiden Reste Z auch einen geschlossenen Ring bilden können, der ggf. durch Ester-, Ether-, Amin, Amid, Carboxy- oder Urethangruppen substituiert sein kann,
b) Azo-Verbindungen gemäß der nachfolgend abgebildeten Strukturformeln 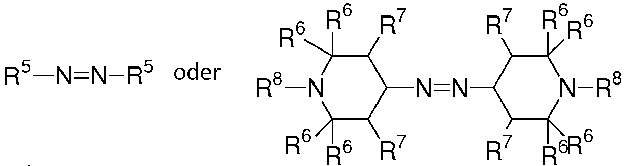 wobei
   - R⁵: einer Alkly-, Cycloalkyl- oder Arylrest bedeutet,
   - R⁶: bei jedem Auftreten gleich oder verschieden ist und einen linearen oder verzweigten Alkylrest bedeutet,
   - R⁷: bei jedem Auftreten gleich oder verschieden ist und Wasserstoff oder einen linearen oder verzweigten Alkylrest bedeutet, und
   - R⁸: bei jedem Auftreten gleich oder verschieden ist und einen Alkyl, Alkoxy-, Aryloxy- Cycloalkyloxy-, Aralkoxy oder Acyloxyrest bedeutet,
c) Dicumyl gemäß der nachfolgend abgebildeten Strukturformel 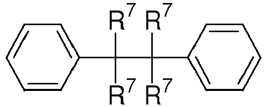 wobei R⁷ die zuvor angegebene Bedeutung aufweist, bevorzugt Methyl ist,
d) und/oder Polycumyl gemäß der nachfolgend abgebildeten Strukturformel 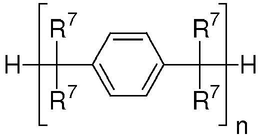 wobei R⁷ die zuvor angegebene Bedeutung aufweist, bevorzugt Methyl ist, und 2 < n < 100.

Typische Beispiele für die zuvor genannten N-Alkoxyamine der angegebenen Struktur sind dabei:
1-Cyclohexyloxy-2,2,6,6-Tetramethyl-4-Octadecylaminopiperidin; Bis(1-Octyloxy-2,2,6,6-Tetramethylpiperidin-4-yl) Sebacat; 2,4-Bis[(1-Cyclohexyloxy-2,2,6,6-Tetramethylpiperidin-4-yl)Butylamino]-6-(2-Hydroxyethylamino-S-Triazin; Bis(1-Cyclohexyloxy-2,2,6,6-Tetramethylpiperidin-4-yl) Adipat; 2,4-Bis[(1-Cyclohexyloxy-2,2,6,6-Tetramethylpiperidin-4-yl)Butylamino]-6-Chloro-S-Triazin; 1-(2-Hydroxy-2-Methylpropoxy)-4-Hydroxy-2,2,6,6-Tetramethylpiperidin; 1-(2-Hydroxy-2-Methylpropoxy)-4-Oxo-2,2,6,6-Tetramethylpiperidin; 1-(2-Hydroxy-2-Methylpropoxy)-4-Octadecanoyloxy-2,2,6,6-Tetramethylpiperidin; Bis(1-(2-Hydroxy-2-Methylpropoxy)-2,2,6,6-Tetramethylpiperidin-4-yl) Sebacat; Bis(1-(2-Hydroxy-2-Methylpropoxy)-2,2,6,6-Tetramethylpiperidin-4-yl) Adipat; 2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin); 4-Piperidinol, 2,2,6,6-tetramethyl-1-(undecyloxy)-, 4,4'-carbonat; das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin); die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; aliphatische Hydroxylamin wie z.B. Disterarylhydroxylamin; sowie Verbindungen der Formel 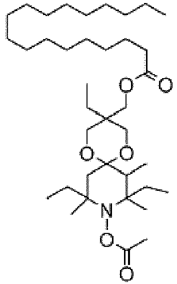 or 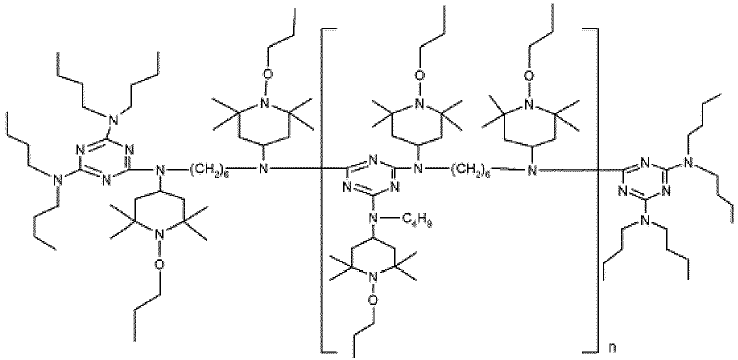 in denen n = 1-15 ist.

Die oben genannten Verbindungen sind teilweise kommerzielle Produkte und werden unter den folgenden Handelsnamen gehandelt: FLAMESTAB NOR 116 (RTM), TINUVIN NOR 371 (RTM), IRGATEC CR 76 (RTM) von BASF SE, Hostavin NOW (RTM) von Clariant oder ADK Stab LA 81 (RTM) von Adeka. Dicumyl und Polycumyl sind Handelsprodukte, die z.B. von United Initiators erhältlich sind.

Schwefelhaltige Flammschutzmittel sind ebenfalls Radikalbildner mit Disulfid- bzw. Polysulfidgrupen (-S-S-) oderThiolgruppen (-S-H), sowie Thiuramsulfide wie z.B. Tetramethylthiuramdisulfid, Dithiocarbamate, wie z.B. Zinkdiethyldithiocarbamat oder Natriumdimethyldithiocarbamat, Mercaptobenzthiazole wie z.B. 2-Mercaptobenzthiazol und Sulfenamide wie z.B. N,N-Dicyclohexyl-2-benzothiazolsulfenamid.

Beispiel für ein Polysulfid ist elementarer Schwefel, andere Polysulfide sind beispielsweise in US 4218332 beschrieben.

Disulfide, Polysulfide, Thiole, Thiuramsulfide, Dithiocarbamate, Mercaptobenzthiazole und Sulfenamide sind im Handel erhältlich.

Weitere geeigneter Radikalbildner sind Hydroxyimide und deren Derivate wie Hydroxyimidester oder Hydroxyimidether, wie sie in WO 2014/154636 beschrieben werden.

Die Kombination der erfindungsgemäßen Hydroxybenzotriazol-Salze mit einem anderen Radikalbildner kann insbes. vorteilhaft sein, da hier die Radikalbildung bei unterschiedlichen Zersetzungstemperaturen erfolgen kann bzw. nach Bedarf eingestellt werden kann.

Das mindestens eine weitere Flammschutzmittel kann insbesondere auch ein phosphorhaltiges Flammschutzmittel sein. Bevorzugte phosphorhaltige Flammschutzmittel sind dabei Phosphinate der folgenden Strukturen: 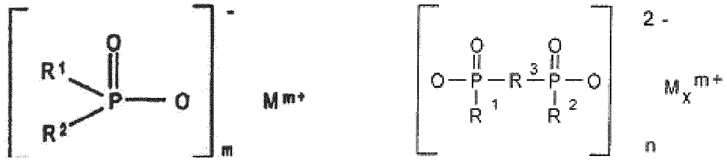 wobei bevorzugt R1 und R2 identisch oder verschieden sind und ausgewählt sind aus linearem oder verzweigtem C1-C6-Alkyl und/oder Aryl; M ausgewählt ist aus der Gruppe bestehend aus Mg, Ca, Al, Sb, Sn, Ge, Ti, Fe, Zr, Ce, Bi, Sr, Mn, Li, Na, K, Zn und/oder einem protonierten Stickstoff-Base, vorzugsweise Calcium-Ionen, Magnesium-Ionen, Aluminium-Ionen, und/oder Zink-Ionen; und m = 1-4, bevorzugt 2 oder 3, ist; n = 1-4, bevorzugt 1 oder 3, ist; x = 1-4, bevorzugt 1 oder 2, ist. In einer besonders bevorzugten Ausführungsform ist R₁ = Alkyl, R₂ = Alkyl und M = Al oder Zn.

Ein besonders bevorzugtes Beispiel für ein erfindungsgemäßes Phosphinat sind die kommerziell erhältlichen Produkte Exolit OP (RTM) von Clariant SE.

Weitere bevorzugte phosphorhaltige Flammschutzmittel sind Metallsalze der hypophosphorigen Säure mit einer Struktur gemäß der Formel 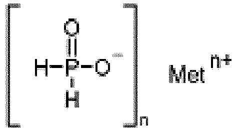 wobei Met ein Metall ist, ausgewählt aus den Gruppen I, II, III und IV des Periodensystems der Elemente, und n eine Zahl von 1 bis 4 ist, die der Ladung des entsprechenden Metall-Ions Met entspricht. Metⁿ⁺ ist beispielsweise Na⁺, Ca²⁺, Mg²⁺, Zn²⁺, Ti⁴⁺ oder Al³⁺, wobei Ca²⁺, Zn²⁺ und Al³⁺ besonders bevorzugt sind.

Die oben genannten Salze der hypophosphorigen Säure sind teilweise kommerziell erhältlich z.B. unter der Bezeichnung Phoslite (RTM) von Italmatch Chemicals.

Eine weitere bevorzugte Gruppe von Phosphorhaltigen Flammschutzmitteln sind Phosphonate oder Phosphonsäurediarylester einer Struktur gemäß der folgenden Formel: 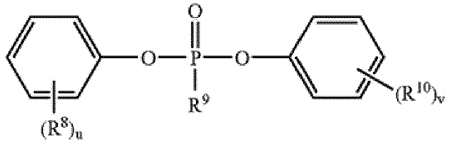 wobei R₈ und R₁₀ = H, Alkyl, vorzugsweise C1-C4-Alkyl sind, R₉ = C1-C4-Alkyl, u = 1-5 ist und v = 1-5 ist.

Entsprechende Strukturen können auch in der Form von Phosphonat-Oligomeren, Polymeren und Co-Polymeren vorliegen. Linear oder verzweigte Phosphonat-Oligomere und Polymere sind aus dem Stand der Technik bekannt. Für verzweigte Phosphonat-Oligomere und Polymere wird auf die US-Patente US 2 716 101, US 3 326 852, US 4 328 174, US 4 331 614, US 4 374 971, US 4 415 719, US 5 216 113, US 5 334 692, US 3 442 854, US 6 291 630 B1 US 6 861499 B2 und US 7816486 B2 verwiesen. Für Phosphonat-Oligomere wird auf die US-Patentanmeldungen US 2005/0020800 A1, US 2007/0219295 A1 und US 2008/0045673 A1 verwiesen. In Bezug auf lineare Phosphonat-Oligomere und Polymere wird auf die US-Patent-Dokumente US 3 946 093, US 3 919 363, US 6 288 210 B1, US 2 682 522 und US 2 891 915 verwiesen.

Polymere und oligomere Phophonate sind beispielsweise unter dem Handelsnamen Nofia (RTM) von FRX Polymers erhältlich.

Eine weitere bevorzugte Gruppe von phosphorhaltigen Flammschutzmitteln sind Verbindungen auf Basis von Oxaphosphorinoxid und deren Derivate mit beispielsweise den folgenden Strukturen: 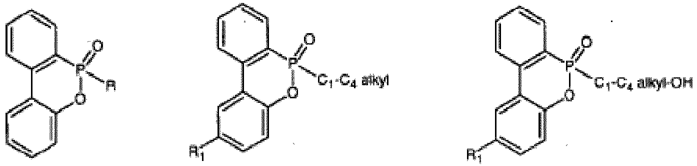 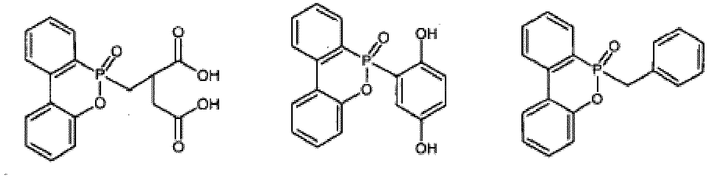 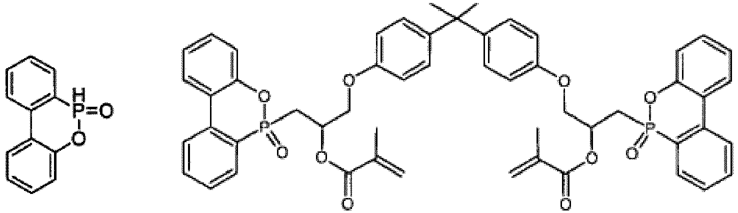 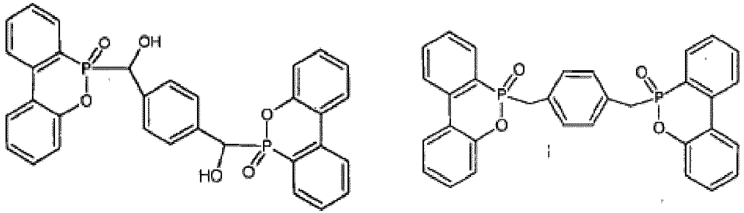 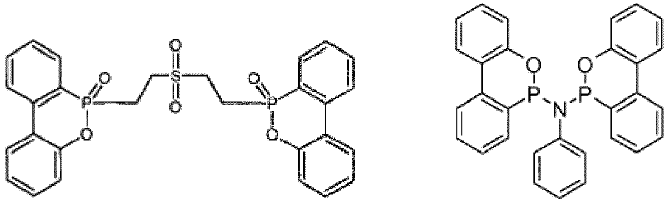 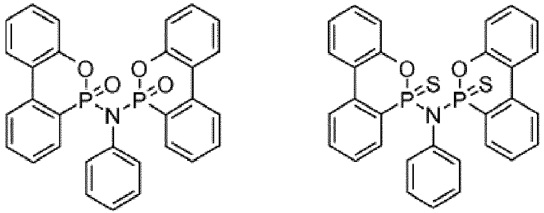 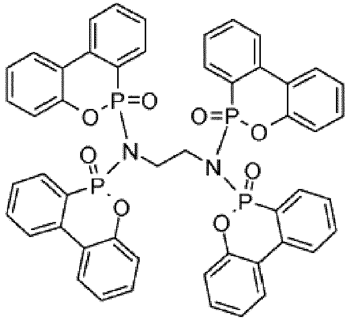 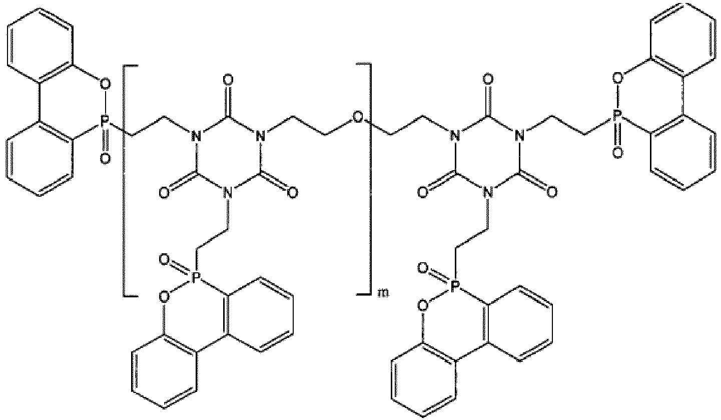 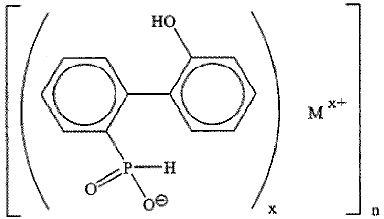 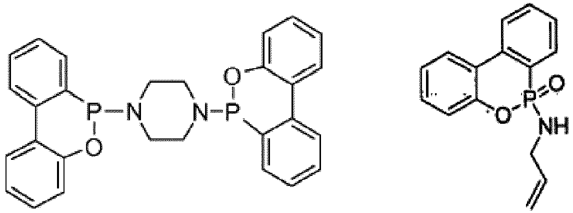 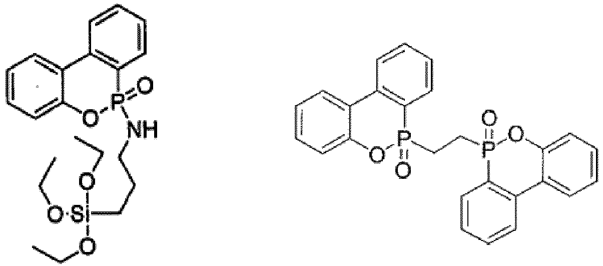 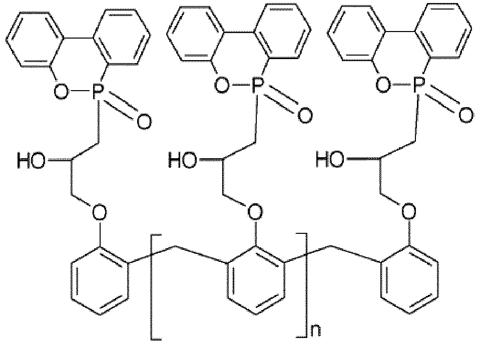 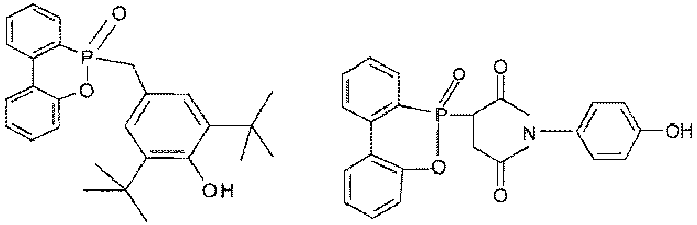 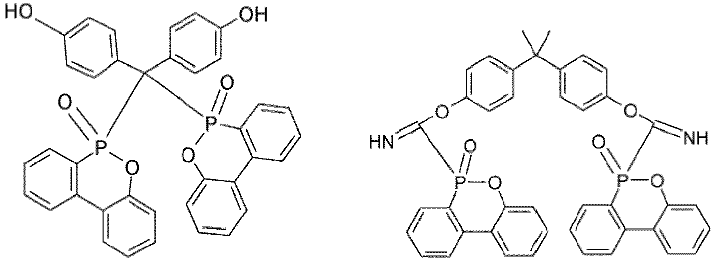 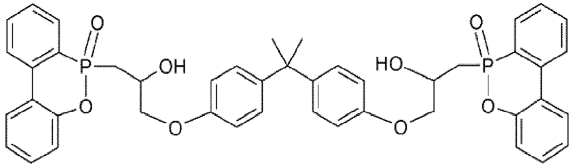 wobei M ein Metall ist, ausgewählt aus der zweiten, dritten, zwölften oder dreizehnten Gruppe des Periodensystems der Elemente ist, x = 2 oder 3 ist, n ≥ 10 ist, m= 0-25ist, R = H, Halogen oder ein aliphatischer oder aromatischer Rest mit 1-32 C-Atomen ist und R₁ = H, C1-C6-Alkyl ist.

Produkte auf der Basis von Oxophosphorinoxid sind beispielsweise unter dem Handelsnamen Ukanol (RTM) von Schill und Seilacher GmbH im Handel. Weitere Verbindungen können beispielsweise gemäß der Patentschriften WO 2013020696, WO 2010135398, WO03070736, WO2006084488, WO 2006084489, WO2011000019, WO2013068437, WO2013072295 hergestellt werden.

Weitere synergistische phosphorhaltige Flammschutzmittel sind zyklische Phosphonate einer Struktur gemäß einer der folgenden Formeln: 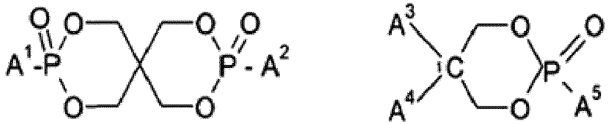 wobei A¹ und A² unabhängig voneinander eine substituierte oder nicht substituierte, geradkettige oder verzweigte Alkylgruppe mit 1 bis 4 Kohlenstoffatomen, substituiertes oder nicht substituiertes Benzyl, substituiertes oder nicht substituiertes Phenyl, substituiertes oder nicht substituiertes Naphthyl darstellen und wobei A³ und A⁴ unabhängig voneinander Methyl oder Ethyl sind und A⁵ eine geradkettige oder verzweigte Alkylgruppe mit 1 bis 4 Kohlenstoffatomen oder eine Phenyl- oder Benzylgruppe ist, die jeweils bis zu 3 Methylgruppen aufweisen kann, ist.

Zyklische Phosphonate sind beispielsweise von der Fa. Thor GmbH unter dem Handelsnamen Aflammit (RTM) im Handel oder können gemäß EP 2450401 hergestellt werden.

Weitere synergistische phosphorhaltige Flammschutzmittel sind Phosphacene, insbes. polymere Phosphacene. Ein entsprechendes Produkt ist z.B. unter der Bezeichnung SPB-100 von Otsuka Chemicals im Handel.

Das mindestens eine weitere Flammschutzmittel kann insbesondere auch ein Stickstoffhaltiges Flammschutzmittel sein. Bevorzugte Stickstoffhaltige Flammschutzmittel sind Melaminpolyphosphat, Melamincyanurat, Melamin-Metall-Phosphate, Poly-[2,4-(piperazin-1,4-yl)-6-(morpholin-4-yl)-1,3,5-triazin] und Ammoniumpolyphosphat. Diese Verbindungen sind kommerzielle Produkte und unter den Handelsnamen Melapur (RTM) von BASF SE, Budit (RTM) von Budenheim Chemische Fabrik, Exolit AP (RTM) von Clariant, Safire (RTM) von Floridienne oder MCA PPM Triazine von MCA Technologies GmbH erhältlich.

Im Falle einer kombinatorischen Verwendung der erfindungsgemäß verwendeten Verbindungen gemäß Formeln I bis IV mit mindestens einem weiteren Flammschutzmittel ist es bevorzugt, wenn die zuvor genannten Verbindungen in einem Gewichtsverhältnis (Gesamtheit der Verbindungen gemäß Formeln I bis IV: Flammschutzmittel) von 99:1 bis 1:99, bevorzugt von 5 : 95 bis 50 : 50, besonders bevorzugt von 10 : 90 bis 30 : 70 verwendet werden.

Zusätzlich können Zusatzstoffe ausgewählt aus der Gruppe bestehend aus UV-Absorber, der Lichtstabilisatoren, der Stabilisatoren, der Hydroxylamine, der

Benzofuranone, der Metalldesaktivatoren, der Füllstoffdesaktivatoren, der Nukleierungsmittel, Schlagzähigkeitsverbesserer, Weichmacher, Gleitmittel, Rheologiemodifikatoren, Verarbeitungshilfsmittel, Pigmente, Farbstoffe, optische Aufheller, antimikrobielle Wirkstoffe, Antistatika, Slipmittel, Antiblockmittel, Kopplungsmittel, Kettenverlängerer, Dispergiermittel, Kompatibilisatoren, Sauerstofffänger, Säurefänger, Markierungsmittel oder Antifoggingmittel eingesetzt werden. In bevorzugter Ausführungsform enthalten die Zusammensetzungen insbesondere Säurefänger, z.B. auf Basis von Salzen langkettiger Säuren wie z.B. Calciumstearat, Magnesiumstearat, Zinkstearat, Calciumlactat, Calciumstearoyl-2-lactylat oder von Hydrotalciten und/oder Stabilisatoren aus der Gruppe der phenolischen Antioxidantien und der Phosphite/Phosphonite und/oder Lichtstabilisatoren aus der Gruppe der gehinderten Amine (HALS) und/oder Dispergiermittel.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert-*butyl-2'-hydroxyphenyl)-5-chlorobenzotriazol, 2-(3'-*tert*-Butyl-2'-hydroxy-5'-methylphenyl-5-chlorobenzotriazol, 2-(3'-*sec*-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxy-carbonylethyl)phenyl)-5-chlorobenzotriazol, 2-(3'-*tert*-Butyl-5'-[2-(2-ethylhexyloxy)carbonylethyl]-2'-hydroxyphenyl)-5-chlorobenzotriazol, 2-(3'-*tert*-Butyl-2'-hydroxy-5'-(2-methoxycarbonylethyl)phenyl)-5-chlorobenzotriazol, 2-(3'-*tert*-Butyl-2'-hydroxy-5'-(2-methoxycarbonylethyl)phenyl)-benzotriazol, 2-(3'-*tert*-Butyl-2'-hydroxy-5'-(2-octyloxycarbonylethyl)phenyl)-benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)-benzotriazol, 2-(3'-*tert*-Butyl-2'-hydroxy-5'-(2-isooctyloxycarbonylethyl)-phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂-⁆-2, wobei R = 3'*-tert-*Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-hydroxy-3'-(1,1,3,3-tetramethylbutyl)-5'-(α,α-dimethylbenzyl)phenyl]benzotriazol Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4-*tert-*butylbenzoyl)resorcinol, Benzoylresorcinol, 2,4-Di-*tert*-butylphenyl-3,5-di-*tert-*butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert*-butoxanilid, 2-Ethoxy-2'-ethyloxanilid, N,N'-Bis(3-dimethylaminopropyl)oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxy-propyloxy]phenyl}-4,6-bis(2,4-dimethylphenyl-1,3,5-triazin.

Geeignete Metalldesaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)-oxylyldihydrazid, N,N'-Bis(salicyloyl)thiopropionyldihydrazid.

Insbesondere als Metalldesaktivatoren geeignet sind die folgenden Strukturen:

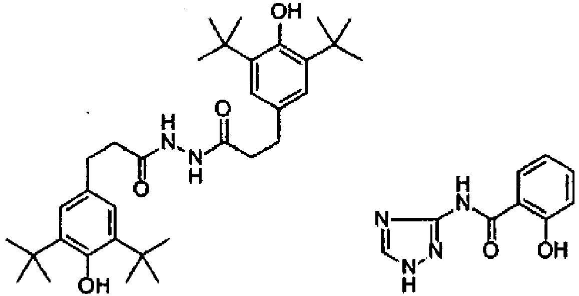

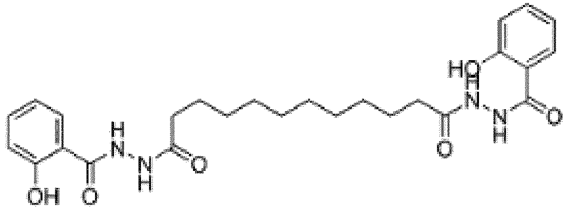

Geeignete phenolische Antioxidantien sind beispielsweise:
Alkylierte Monophenole, wie z.B. 2,6-Di-*tert*-butyl-4-methylphenol, 2-*tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-tert-butyl-3-methylphenol), 4,4'-Thiobis(6-*tert*-butyl-2-methylphenol), 4,4'-Thiobis(3,6-di-*sec-*amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(a-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert-*butylphenol), 2,2'-Ethylidenbis(4,6-di-tert-butylphenol), 2,2'-Ethylidenbis(6-*tert*-butyl-4-isobutylphenol), 2,2'-Methylenbis[6-(a-methylbenzyl)-4-nonylphenol], 2,2'-Methylenbis[6-(a,a-dimethylbenzyl)-4-nonylphenol], 4,4'-Methylenbis(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert*-butyl-5-methyl-2-hydroxybenzyl)-4-methylphenol, 1,1,3-Tris(5-*tert-*butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert-*butyl-4'-hydroxyphenyl)butyrat], Bis(3-*tert*-butyl-4-hydroxy-5-methylphenyl)-dicyclopentadien, Bis[2-(3'-*tert*-butyl-2'-hydroxy-5'-methylbenzyl)-6-*tert-*butyl-4-methylphenyl]terephthalat, 1,1-Bis-(3,5-dimethyl-2-hydroxyphenyl)-butan, 2,2-Bis(3,5-di-*tert*-butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert-*butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzyl-mercaptoacetat, Tridecyl-4-hydroxy-3,5-di-*tert*-butylbenzylmercaptoacetat, Tris(3,5-di-*tert*-butyl-4-hydroxybenzyl)amin,, Bis(4-*tert*-butyl-3-hydroxy-2,6-dimethylbenzyl)dithioterephthalat, Bis(3,5-di-*tert*-butyl-4-hydroxybenzyl)-sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert*-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzyl-phosphonat, Dietyhl-3,5-di-*tert*-butyl-4-hydroxybenzylphosphonat, Dioctadecyl-3,5-di-*tert*-butyl-4-hydroxybenzylphosphonat, Dioctadecyl-5-*tert-*butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der 3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard®XL-1, vertrieben durch Uniroyal);
Ascorbinsäure (Vitamin C).

Besonders bevorzugte phenolische Antioxidantien sind:
Octadecyl-3-(3,5-di-*tert*-butyl-4-hydroxyphenyl)propionat, Pentaerythritoltetrakis[3-(3,5-di-*tert*-butyl-4-hydroxyphenyl)propionat, Tris(3,5-di-*tert*-butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid.

Geeignete Phosphite/Phosphonite sind beispielsweise:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-tert-butylphenyl)phosphit, Diisodecylpentaerythritoldiphosphit, Bis(2,4-di-*tert*-butylphenyl)-pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)-methylphosphit, Bis(2,4-di-*tert*-butyl-6-methylphenyl)ethylphosphit, 6-Fluoro-2,4,8,10-tetra-*tert*-butyl-12-methyl-dibenz[d,g]-1,3,2-dioxaphosphocin, 2,2'2"-Nitrilo[triethyltris(3,3",5,5'-tetra-*tert*-butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butylphenoxy)-1,3,2-dioxaphosphiran.

Besonders bevorzugte Phosphite/Phosphonite sind:

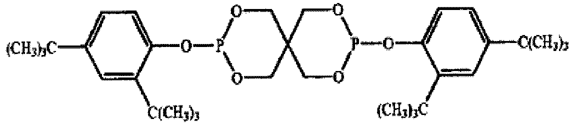

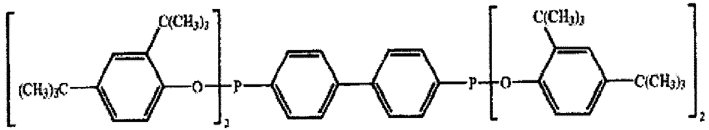

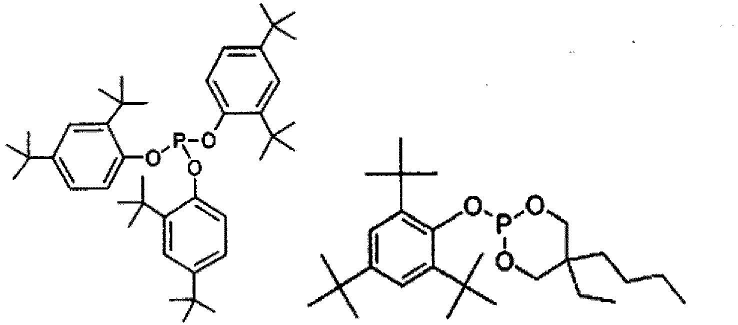

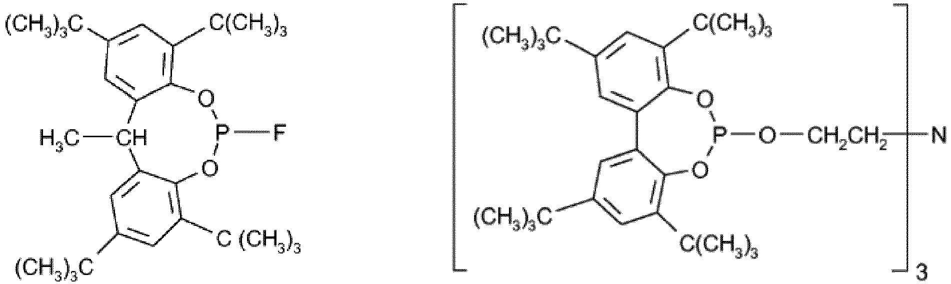

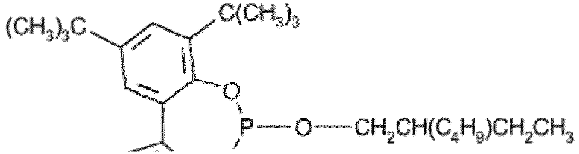

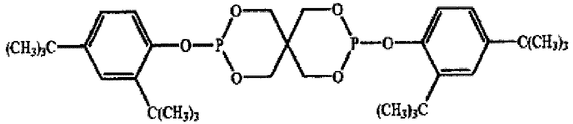

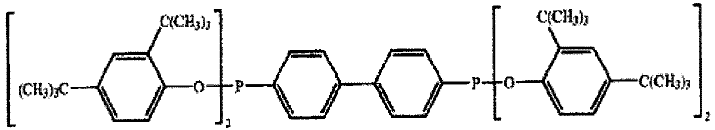

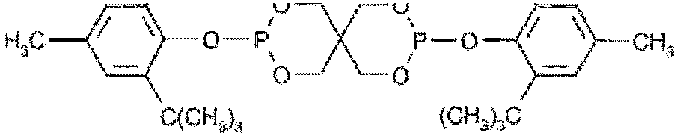

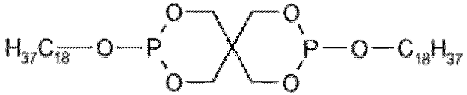

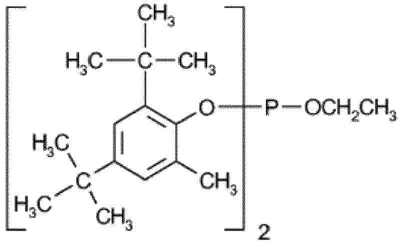

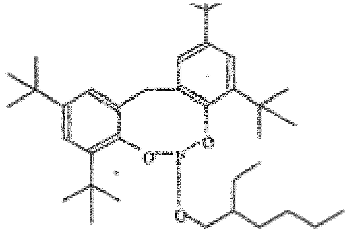

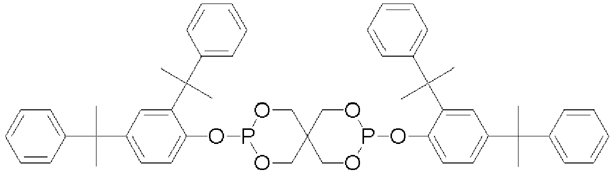

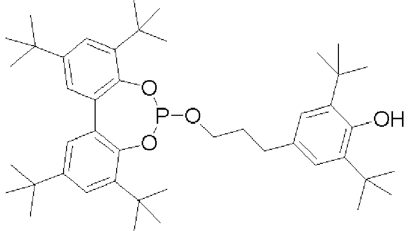

Weitere geeignete Stabilisatoren sind aminische Antioxidantien. Geeignete aminische Antioxidantien sind beispielsweise:
N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetra-methyl-4,4'-diaminodiphenylmethan, 1,2-Bis[(2-methyl-phenyl)amino]ethan, 1,2-Bis(phenylamino)-propan, (o-Tolyl)biguanid, Bis[4-(1',3'-dimethylbutyl)phenyl]amin, *tert*octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Weitere geeignete aminische Antioxidantien sind Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearylhydroxylamin, N-Benzyl-α-phenylnitron, N-Octadecyl-α-hexadecylnitron, sowie Genox EP (Addivant) gemäß der Formel:

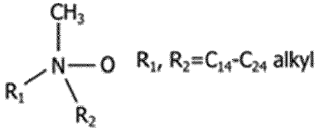

Weitere geeignete Stabilisatoren sind Thiosynergisten. Geeignete Thiosynergisten sind beispielsweise Distearylthiodipropionat, Dilauryldipropionat oder die Verbindung gemäß der folgenden Formel:

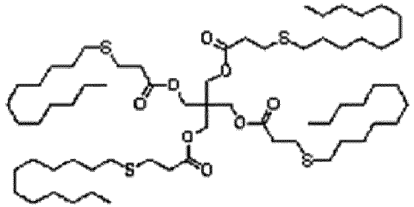

Weitere geeignete Stabilisatoren insbesondere für Polyamide sind Kupfersalze wie z.B. Kupfer-(l)-iodid, Kupfer-(l)-bromid oder Kupferkomplexe wie z.B. Triphenylphosphin-Kupfer-(l)-Komplexe.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z.B. Benzoesäure, Bernsteinsäure, Adipinsäure, z.B. Natriumbenzoat, Zinkglycerolat, Aluminium-hydroxy-bis(4-*tert*-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-*tert*-butylphenyl)phosphat, sowie Trisamide wie z.B. gemäß der folgenden Strukturen

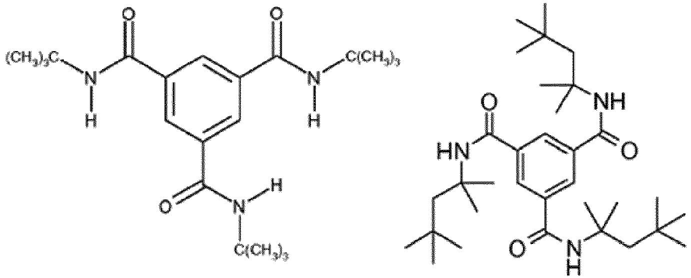

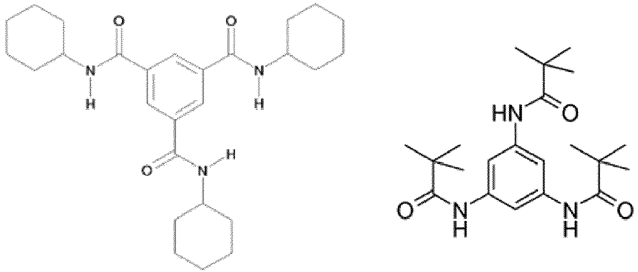

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose,synthetische Fasern oder Metallfasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Pigmente können anorganischer oder organischer Natur sein. Geeignete anorganische Pigmente sind beispielsweise Titandioxid, Zinkoxid, Zinksulfid, Eisenoxid, Ultramarin, Ruß. Geeignete organische Pigmente sind beispielsweise Anthrachinone, Anthanthrone, Benzimidazolone, Chinacridone, Diketopyrrolopyrrole, Dioxazine, Indanthrone, Isoindolinone, AzoVerbindungen, Perylene, Phthalocyanine oder Pyranthrone. Weitere geeignete Pigmente sind Effektpigmente auf Metallbasis oder Perlglanzpigmente auf Metalloxid-Basis.

Optische Aufheller sind beispielsweise Bisbenzoxazole, Phenylcumarine oder Bis(styryl)biphenyle und insbesondere optische Aufheller der Formeln:

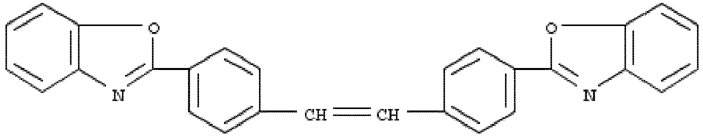

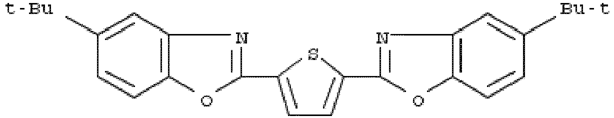

Geeignete Füllstoffdesaktivatoren sind beispielsweise Epoxide wie z.B. Bisphenol-A-diglycidylether, Polysiloxane, Polyacrylate insbesondere Blockcopolymere wie Polymethacrylsäure-polyalkylenoxid oder Polystyrol-Polyacrylat-Polyglycidyl(meth)acrylat-Copolymere.

Geeignete Antistatika sind beispielsweise ethoxylierte Alkylamine, Fettsäureester, Alkylsulfonate und Polymere wie z.B. Polyetheramide oder Copolymere, die Salze der Acrylsäure beinhalten, wie z.B. Polyethylen-Polyacrylat-Polyacrylat-Na-Copolymere.

Weiterhin betrifft die vorliegende Erfindung eine Formmasse, ein Formteil, einen Lack oder eine Beschichtung herstellbar aus einer zuvor beschriebenen flammgeschützten Kunststoffzusammensetzung insbesondere in Form von Spritzgussteilen, Folien oder Filmen, Beschichtungen oder Lacken, Schäumen, Fasern, Kabeln und Rohren, Profilen, Bändchen, Membranen, wie z.B. Geomembranen, Klebstoffen, die über Extrusion, Spritzguss, Blasformen, Kalandrieren, Pressverfahren, Spinnprozesse oder Streich- und Beschichtungsprozesse hergestellt werden z.B. für die Elektro- und Elektronikindustrie, Bauindustrie, Transportindustrie (Auto, Flugzeug, Schiff, Bahn), für medizinische Anwendungen, für Haushalts- und Elektrogeräte, Fahrzeugteile, Konsumartikel, Möbel, Textilien. Ein weiterer Einsatzbereich sind Lacke, Farben und Beschichtungen (Coatings).

Beispielsweise können die erfindungsgemäßen Zusammensetzungen für Marineanwendungen (Pontoons, Planken, Boote), Autoanwendungen (Stoßfänger, Batterien, Verkleidungsteile, Benzintanks, Kabel, Leitungen etc.), Flugzeugteile, Eisenbahnteile, Fahrrad- und Motorradteile, Raumfahrtanwendungen wie z.B. Satellitenteile, Gehäuseteile für Elektrogeräte wie Computer, Telefone, Drucker, Audio- und Videosysteme, Stecker, gedruckte Schaltungen, Schalter, Lampenabdeckungen, Kühlschränke, Kaffeemaschinen, Staubsauger, Rotorblätter für die Energiegewinnung, Ventilatoren, Folien für Dachkonstruktionen, Baufolien, Rohre, wie z.B. Abwasserrohre und Gasrohre, Verbindungsstücke, Drainagesysteme, Profile wie z.B. Fensterprofile oder Kabelkanäle, Wood Composites, Möbel, Fußboden, Verkleidungsplatten, künstlicher Rasen, Stadionsitze, Teppiche, Netze, Seile, Möbelteile, Matten, Gartenstühle, Flaschenkästen, Behälter und Fässer verwendet werden.

Die Erfindung betrifft ebenso ein Verfahren zur Herstellung einer zuvor beschriebenen erfindungsgemäßen Kunststoffzusammensetzung, bei dem die mindestens eine Verbindung gemäß den Formeln I bis IV vor, nach oder gleichzeitig mit dem mindestens einen weiteren Flammschutzmittel in den mindestens einen Kunststoff bevorzugt das mindestens eine thermoplastische Polymer eingearbeitet wird.

Die Einarbeitung der oben beschriebenen Flammschutzmittel und der zusätzlichen Additive in den Kunststoff erfolgt durch übliche Verarbeitungsmethoden, wobei das Polymere aufgeschmolzen und mit den Flammschutzmitteln und Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen erfolgen. Verschiedene Flammschutzmittel und Additive können dabei separat oder als Mischung zugegeben werden, in Form von Flüssigkeiten, Pulvern, Granulaten oder kompaktierten Produkten oder ebenfalls in Form von Masterbatchen oder Konzentraten, die beispielsweise 50-80 % der erfindungsgemäßen Zusammensetzungen enthalten.

Die vorliegende Erfindung wird anhand der nachfolgenden Beispiele beschrieben, ohne die Erfindung auf die speziellen Beispiele zu verkürzen.

### Ausführungsbeispiele

### a) Herstellung der Salze

### Beispiel 1: Synthese des Kaliumsalzes von 1-Hydroxybenzotriazol (K-btaO)

Analog zur Literatur (L.A. Carpino et al., Angew. Chem. Int. Ed. 2002, 41,442-445) wird zu einer Dispersion aus K₂CO₃ (29,5g) in einer 16% wässrigen Methanol-Lösung (171 mL) 1-Hydroxybenzotriazol (36 g) unter Rühren hinzugefügt. Nach Beendigung der Gasentwicklung wird das Gemisch für eine weitere Stunde gerührt und anschließend das überschüssige K₂CO₃ abfiltriert. Die Lösung wird am Rotationsverdampfer eingeengt und das erhaltene Produkt durch zweimaliges Lösen in Methanol und Fällen in Diethylether umkristallisiert.

TGA: 1,6% Gewichtsverlust bei 40-380°C; 73,4% Gewichtsverlust bei 380-390°C; 0,2% Gewichtsverlust bei 390-600°C.

### Beispiel 2: Synthese des Zinksalzes von 1-Hydroxybenzotriazol (Zn-btaO)

Analog zur Literatur (A. D. Katsenis et al., Inorganic Chemistry Communication 2009, 12, 92-96) wird das gewünschte Produkt aus der Reaktion von Zn(ClO₄)₂ (9,5 g) in einer wässrigen Lösung (375 mL) mit zwei Äquivalenten K-btaO (8,5 g) in DMF (500 mL) nach Lagerung bei Zimmertemperatur als Feststoff erhalten.

TGA: 3,3% Gewichtsverlust bei 40-360°C; 92,2% Gewichtsverlust bei 360-370°C; 0,3% Gewichtsverlust bei 370-600°C.

### b) Herstellung und Prüfung einer flammgeschützten erfindungsgemäßen Kunststoff-Mischung

Die Extrusionen der Polypropylen-Proben (DOW C766-03) erfolgen bei einer Temperatur von 190°C und einer Schneckendrehzahl von 150 U/min auf einem 11 mm Doppelschneckenextruder (Process 11 von Thermo Scientific). Das gewünschte Verhältnis aus Polymer und Additiven wird zunächst durch Mischen homogenisiert und über eine volumetrischen Dosierung der Extrusion zugeführt.

Probekörper für die Brandprüfung werden aus dem Granulat bei einer Temperatur von 220°C und einem Druck von 2 t unter Verwendung einer hydraulischen 10t-Presse (Werner & Pfleiderer) hergestellt. Dazu wird das Granulat in die Pressform eingefüllt und diese in die bereits vorgeheizte Presse überführt. Bei einem Druck von 0,5 t wird das Granulat zunächst 60 s lang aufgeschmolzen. Nach Ablauf der Schmelzzeit wird der Druck auf 2 t erhöht und für weitere 3 min konstant gehalten. Unter Beibehaltung des Anpressdruckes wird die Form auf 60°C abgekühlt und danach die Probekörper entnommen. Die Probenkörper haben gemäß Norm die folgenden Dimensionen: 127,5 x 12,5 x 1,5 mm.

Die in der Tabelle 1 enthaltenen erfindungsgemäßen Beispiele und Vergleichsbeispiele wurden nach DIN EN 60695-11-10 geprüft und die Brennzeiten und Klassifizierung gemäß Norm erhalten:

**Tabelle 1: Zusammensetzungen in Polypropylen und Ergebnisse der Brandprüfung**

| **Beispiel** | **Zusammensetzung Flammschutzmittel** | **Brennzeiten Summe der Nachbrennzeiten von 5 Prüfkörper bei 2 Beflammungen (in Sekunden)** | **Klassifizierung nach DIN EN 60695-11-10** |
|---|---|---|---|
| Vergleichsbeispiel 1 (Stand der Technik) | 15% Diethylphosphinat-Aluminum | >200 | Nicht klassifiziert |
| Vergleichsbeispiel 2 | 20% Diethylphosphinataluminiu m | 170 | Nicht klassifiziert |
| Erfindungsgemäßes Beispiel 1 | 15% Diethylphosphinataluminiu m + 2% Zn-Salz | 33,8 | V-2 |
| Erfindungsgemäßes Beispiel 2 | 15% Diethylphosphinataluminiu m + 2% K-Salz | 2,0 | V-2 |
| Erfindungsgemäßes Beispiel 3 | 8% Diethylphosphinataluminu m + 2 % K-Salz | 26,8 | V-2 |
| Erfindungsgemäßes Beispiel 4 | 8% Diethylphosphinataluminiu m + 2 % Zn-Salz | 53,5 | V-2 |
| Erfindungsgemäßes Beispiel 5 | 8 % Phosphonat + 2 % K-Salz | 8,7 | V-2 |

Diethylphosphinataluminium (Exolit OP 1230, Hersteller: Clariant SE):

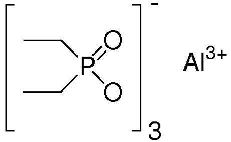

Phosphonat (Aflammit PCO 900, Hersteller: Thor GmbH) entsprechend der folgenden Struktur:

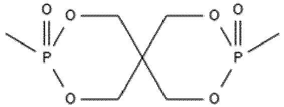

Die erfindungsgemäßen Beispiele sind nach Entfernen der Zündquelle selbstverlöschend und weisen überraschenderweise verkürzte Brennzeiten gegenüber dem Vergleichsbeispiel auf, es wird eine Klassifizierung nach V-2 erhalten.

Es werden neue Flammschutzmittel und neue Flammschutzmittelzusammensetzungen, vorgeschlagen, die aufgrund ihrer thermischen Stabilität und Salzstruktur Vorteile gegenüber heutigen Produkten erwarten lassen wie z.B. geringes Migrationsverhalten, sichere Einarbeitbarkeit, Langzeitstabilität.

## Patentansprüche

1. Verwendung einer Verbindung gemäß den allgemeinen Formeln I bis IV 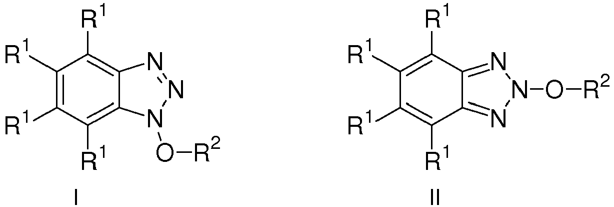 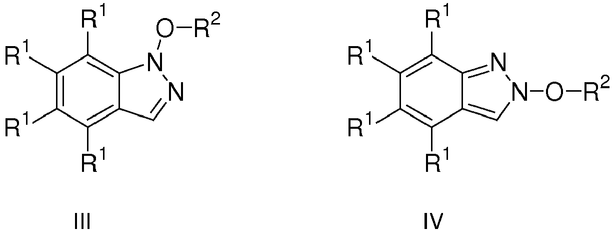 oder eines Gemisches von mindestens zwei Verbindungen der allgemeinen Formeln I bis IV
wobei bei jedem Auftreten jeweils unabhängig voneinander
R¹ ausgewählt ist aus der Gruppe bestehend aus Wasserstoff, Alkylresten mit 1 bis 18 Kohlenstoffatomen, teilweise oder perfluorierten Alkylresten mit 1 bis 18 Kohlenstoffatomen, ungesättigten organischen Resten bis 1 bis 18 Kohlenstoffatomen, wobei zwei vicinale Reste R¹ auch zu einem Ring verbunden sein können, -NO₂ -F, -Cl und -Br, und
R² ausgewählt ist aus der Gruppe bestehend aus ein-, zwei- oder dreiwertigen anorganischen oder organischen Kationen und Wasserstoff,
als Flammschutzmittel für Kunststoffe.

2. Verwendung nach Anspruch 1, **dadurch gekennzeichnet, dass** die ein-, zwei- oder dreiwertigen anorganischen Kationen ausgewählt sind aus der Gruppe bestehend aus Li⁺, Na⁺, K⁺, ½ Mg²⁺, ½ Ca²⁺, 1/3 Al³⁺, ½ Zn²⁺ und/oder die oder organischen Kationen ausgewählt sind aus der Gruppe bestehend aus Stickstoff- und/oder Phosphor-haltigen organischen Kationen, insbesondere Ammonium, Melaminium und/oder Phosphonium.

3. Verwendung nach einem der vorhergehenden Ansprüche, **dadurch gekennzeichnet, dass** bei jedem Auftreten R¹ Wasserstoff ist und/oder R² ein ein- oder zweiwertiges anorganisches Kation, insbesondere K⁺ ist.

4. Verwendung nach einem der vorhergehenden Ansprüche, **dadurch gekennzeichnet, dass** der Kunststoff ausgewählt ist aus der Gruppe bestehend aus thermoplastischen, elastomeren oder duroplastischen Kunststoffen, insbesondere
a) Polymere aus Olefinen oder Diolefinen wie z.B. Polyethylen (LDPE, LLDPE, VLDPE, ULDPE, MDPE, HDPE, UHMWPE), Metallocen-PE (m-PE), Polypropylen, Polyisobutylen, Poly-4-methyl-penten-1, Polybutadien, Polyisopren, Polycycloocten, Polyalkylen-Kohlenmonoxid-Copolymere, sowie Copolymere in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure und deren Salze (Ionomere), sowie Terpolymere wie z.B. Ethylen-Acrylsäure-Glycidylacrylat, Pfropfpolymere wie z.B. Polypropylen-graft-Maleinsäureanhydrid, Polypropylen-graft-Acrylsäure, Polyethylen-graft-Acrylsäure, Polyethylen-Polybutylacrylat-graft-Maleinsäureanhydrid,
b) Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrol-Isopren, Styrol-Isopren-Styrol (SIS), Styrol-butadien-acrylnitril (ABS), Styrolacrylnitril-acrylat (ASA), Styrol-Ethylen, Styrol-Maleinsäureanhydrid-Polymere einschl. entsprechender Pfropfcopolymere wie z.B. Styrol auf Butadien, Maleinsäureanhydrid auf SBS oder SEBS, sowie Pfropfcopolymere aus Methylmethacrylat, Styrol-Butadien und ABS (MABS),
c) halogenenthaltende Polymere wie z.B. Polyvinylchlorid (PVC), Polychloropren und Polyvinylidenchlorid (PVDC), Copolymere aus Vinylchlorid und Vinylidenchlorid oder aus Vinylchlorid und Vinylacetat, chloriertes Polyethylen, Polyvinylidenfluorid,
d) Polymere von ungesättigten Estern wie z.B. Polyacrylate und Polymethacrylate wie Polymethylmethacrylat (PMMA), Polybutylacrylat, Polylaurylacrylat, Polystearylacrylat, Polyglycidylacrylat, Polyglycidylmethacrylat, Polyacrylnitril, Polyacrylamide, Copolymere wie z.B. Polyacrylnitril-Polyalkylacrylat,
e) Polymere aus ungesättigten Alkoholen und Derivaten, wie z.B. Polyvinylalkohol, Polyvinylacetat, Polyvinylbutyral,
f) Polyacetale, wie z.B. Polyoxymethylen POM) oder Copolymere mit z.B. Butanal,
g) Polyphenylenoxide und Blends mit Polystyrol oder Polyamiden,
h) Polymere von cyclischen Ethern wie z.B. Polyethylenglycol, Polypropylenglycol, Polyethylenoxid, Polypropylenoxid,
i) Polyurethane, aus hydroxyterminierten Polyethern oder Polyestern und aromatischen oder aliphatischen Isocyanaten insbesondere lineare Polyurethane, Polyharnstoffe,
j) Polyamide wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol, Blends von unterschiedlichen Polyamiden wie z.B. PA-6 und PA 6.6 bzw. Blends von Polyamiden und Polyolefinen wie z.B. PA/PP,
k) Polyimide, Polyamid-imide, Polyetherimide, Polyesterimide, Poly(ether)ketone, Polysulfone, Polyethersulfone, Polyarylsulfone, Polyphenylensulfid, Polybenzimidazole, Polyhydantoine,
l) Polyester aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterephthalat, Polyethylennaphthylat, Poly-1,4-dimethylolcyclohexanterephthalat, Polyhydroxybenzoat, Polyhydroxynaphthalat, Polymilchsäure (PLA), Polyhydroxybutyrat (PHB), Polyhydroxyvalerat (PHV),
m) Polycarbonate, Polyestercarbonate, sowie Blends wie z.B. PC/ABS, PC/PBT, PC/PET/PBT, PC/PA
n) Cellulosederivate wie z.B. Cellulosenitrat, Celluloseacetat, Cellulosepropionat, Cellulosebutyrat
o) nicht-thermoplastischen oder duroplastischen Kunststoffen,
p) Epoxidharze, bestehend aus di- oder polyfunktionellen Epoxidverbindungen in Kombination mit z.B. Härtern auf der Basis von Aminen, Anhydriden, Dicyandiamid, Mercaptanen, Isocyanaten oder katalytisch wirkenden Härtern,
q) Phenolharze wie z.B. Phenol-Formaldehyd-Harze, Harnstoff-Formaldehyd-Harze, Melamin-Formaldehydharze,
r) ungesättigte Polyesterharze aus ungesättigten Dicarbonsäuren und Diolen,
s) Silikone,
t) Polyurethane als Reaktionsprodukte aus di- oder polyfunktionellen Isocyanaten und Polyolen, Polyharnstoffe,
u) Alkydharze, Allylharze,
v) sowie Mischungen, Kombinationen oder Blends aus zwei oder mehr der zuvor genannten Polymere.

5. Verwendung nach einem der vorhergehenden Ansprüche, **dadurch gekennzeichnet, dass** das die Verbindung gemäß den allgemeinen Formeln I bis IV und/oder das Gemisch aus mindestens zwei Verbindungen der Formel I bis IV dem Kunststoff zugemischt wird, wobei der Gesamtgehalt der Verbindung gemäß den allgemeinen Formeln I bis IV im entstehenden Gemisch insbesondere 0,01 bis 50 Gew.-%, bevorzugt 0,05 bis 25 Gew.-%, beträgt.

6. Flammgeschützte Kunststoffformmasse, enthaltend mindestens einen Kunststoff sowie als Flammschutzmittel mindestens eine Verbindung gemäß den allgemeinen Formeln I bis IV 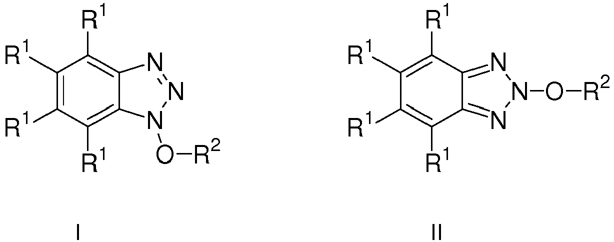 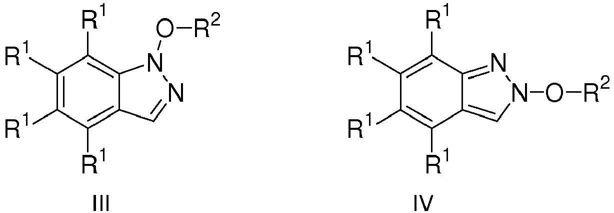 oder eines Gemisches von mindestens zwei Verbindungen der allgemeinen Formeln I und/oder II
wobei bei jedem Auftreten jeweils unabhängig voneinander
R¹ ausgewählt ist aus der Gruppe bestehend aus Wasserstoff, Alkylresten mit 1 bis 18 Kohlenstoffatomen, teilweise oder perfluorierten Alkylresten mit 1 bis 18 Kohlenstoffatomen, ungesättigten organischen Resten bis 1 bis 18 Kohlenstoffatomen, wobei zwei vicinale Reste R¹ auch zu einem Ring verbunden sein können, -NO₂ -F, -Cl und -Br, und
R² ausgewählt ist aus der Gruppe bestehend aus ein-, zwei- oder dreiwertigen anorganischen oder organischen Kationen und Wasserstoff.

7. Kunststoffformmasse nach vorhergehendem Anspruch, **dadurch gekennzeichnet, dass** der Gesamtgehalt der mindestens einen Verbindung gemäß den allgemeinen Formeln I bis IV in der Kunststoffformmasse 0,01 bis 50 Gew.-%, bevorzugt 0,05 bis 25 Gew.-%, beträgt.

8. Kunststoffformmasse nach einem der beiden vorhergehenden Ansprüche, **dadurch gekennzeichnet, dass** die Kunststoffformmasse neben der mindestens einen Verbindung gemäß den allgemeinen Formeln I bis IV und dem mindestens einen Kunststoff zusätzlich bis zu 70 Gew.-Teile, bevorzugt bis zu 25 Gew.-Teile, bezogen auf die Gesamtheit der mindestens einen Verbindung gemäß den allgemeinen Formeln I und II und des mindestens einen Kunststoffs, mindestens ein weiteres Flammschutzmittel, ausgewählt aus der Gruppe bestehend aus phosphorhaltigen, stickstoffhaltigen, anorganischen, siliciumhaltigen, borhaltigen, schwefelhaltigen, halogenhaltigen und/oder radikalbildenden Flammschutzmitteln enthält.

9. Kunststoffformmasse nach vorhergehendem Anspruch, **dadurch gekennzeichnet, dass** das mindestens eine weitere Flammschutzmittel ausgewählt ist aus der Gruppe bestehend aus
a) anorganischen Flammschutzmitteln wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) stickstoffhaltigen Flammschutzmitteln wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melaminmethanphosphonat, Melamin-Metall-Phosphate wie z.B. Melaminaluminumphosphat, Melaminzinkphosphat, Melaminmagnesiumphosphat, sowie die entsprechenden Pyrophosphate und Polyphosphate, Ethylendiaminmethanphosphonat, Poly-[2,4-(piperazin-1,4-yl)-6-(morpholin-4-yl)-1,3,5-triazin], Ammoniumpolyphosphat, Melaminborat, Melaminhydrobromid,
c) Phosphorhaltigen Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und ihrer Derivate wie Alkylphosphinatsalzen z.B. Diethylaluminiumphosphinat, Diethylphosphinat-Zink oder Aluminiumphosphinat, Aluminiumphosphit, Aluminiumphosphonat, Aluminiumphosphat, Phosphonatester, oligomere und polymere Derivate der Methanphosphonsäure, 9,10-Dihydro-9-oxa-10-phosphorylphenanthren-10-oxid (DOPO) und deren substituierte Verbindungen, Phosphacene, insbesondere polymere Phosphacene,
d) Halogenhaltigen Flammschutzmitteln auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis(tribromphenoxy)ethan, Hexabromcyclododecan, bromiertes Diphenylethan, Tris-(2,3-dibrompropyl)isocyanurat, Ethylen-bis-(tetrabromophthalimid), Tetrabromo-bisphenol A, Tetrabromobisphenol A-bis(2,3-dibromopropylether), bromiertes Polystyrol, bromiertes Polybutadien bzw. Polystyrol, bromiertes Polybutadien-Copolymere, bromiertes Epoxidharz, bromierter Polyphenylenether, Polypentabrombenzylacrylat, ggf. in Kombination mit Sb₂O₃ und/oder Sb₂O₅,
e) Boraten, wie z.B. Zinkborat oder Calciumborat, ggf. auf Trägermaterialien wie Silica,
f) Schwefelhaltigen Flammschutzmitteln wie z.B. elementarer Schwefel, Disulfide und Polysulfide, Thiuramsulfid, Dithiocarbamate, Mercaptobenzthiazol und Sulfenamide,
g) Antidrip-Mitteln, wie z.B. Polytetrafluorethylen,
h) Siliciumhaltigen Verbindungen, wie z.B. Polyphenylsiloxane und/oder
i) Radikalbildende Flammschutzmittel wie z.B. Alkoxyamine, Hydroxylaminester, Azoverbindungen, Dicumyl oder Polycumyl, Hydroxyimide oder deren Derivate wie z.B. Hydroxyimidester oder Hydroxyimidether,
j) Kohlenstoffmodifikationen wie z.B Kohlenstoff-Nanoröhren (CNT) oder Graphen.

10. Kunststoffformmasse nach einem der Ansprüche 6 bis 9, **dadurch gekennzeichnet, dass** sie Zusatzstoffe, ausgewählt aus der Gruppe bestehend aus UV-Absorbern, Lichtstabilisatoren, Stabilisatoren, wie der Benzofuranone, Nukleierungsmitteln, Schlagzähigkeitsverbesserern, Weichmachern, Gleitmitteln, Rheologiemodifikatoren, Verarbeitungshilfsmitteln, Pigmenten, Farbstoffen, optischen Aufhellern, antimikrobiellen Wirkstoffen, Antistatika, Slipmitteln, Antiblockmitteln, Kopplungsmitteln, Dispergiermitteln, Kompatibilisatoren, Sauerstofffängern, Markierungsmitteln, Antifoggingmitteln oder Säurefängern, bevorzugt Säurefänger auf Basis von Salzen langkettiger Säuren wie z.B. Calciumstearat, Magnesiumstearat, Zinkstearat, Aluminiumstearat, Calciumlactat, Calciumstearoyl-2-lactylate oder von Hydrotalciten, enthält.

11. Kunststoffformmasse nach einem der Ansprüche 6 bis 10, **dadurch gekennzeichnet, dass** die Kunststoffformmasse neben der mindestens einen Verbindung gemäß den allgemeinen Formeln I bis IV und dem mindestens einen Kunststoff zusätzlich 0,01 bis 10 Gew.-Teile, bevorzugt 0,05 bis 3 Gew.-Teile, bezogen auf die Gesamtheit der mindestens einen Verbindung gemäß den allgemeinen Formeln I und II und des mindestens einen Kunststoffs, mindestens einen Stabilisator, ausgewählt aus der Gruppe bestehend aus phenolischen Antioxidantien, Phosphiten/Phosphoniten, aminischen Antioxidantien, schwefelhaltigen Antioxidantien oder Hydroxylaminen enthält.

12. Kunststoffformmasse nach vorhergehendem Anspruch, **dadurch gekennzeichnet, dass** der mindestens eine Stabilisator ausgewählt ist aus der Gruppe bestehend aus
a) Phenolischen Antioxidantien, insbesondere Octadecyl-3-(3,5-di-tert-butyl-4-hydroxyphenyl)propionat, Pentaerythritol-tetrakis[3-(3,5-di-*tert*-butyl-4-hydroxyphenyl)propionat, Tris(3,5-di-*tert-*butyl-4-hydroxyphenyl)isocyanurat, 1,3,5-Trimethyl-2,4,6-tris(3,5-di-*tert*-butyl-4-hydroxyphenyl)isocyanurat, 1,3,5-Trimethyl-2,4,6-tris(3,5-di-*tert*-butyl-4-hydroxybenzyl)benzol, Triethylenglycol-bis[3-(3-*tert*-butyl-4-hydroxy-5-methylphenyl)propionat, N,N'-Hexan-1,6-diyl-bis[3-(3,5-di-*tert*-butyl-4-hydroxyphenyl)propionsäureamid,
b) Phosphiten/Phosphoniten, insbesondere Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,4-di-cumylphenyl)pentaerythritoldiphosph it, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4, 6-tris(*tert*-butylphenyl)pentaerythritoldiphosphit, Tetrakis(2,4-di-*tert*-butylphenyl)-4,4'biphenylendiphosphonit,
c) Aminischen Antioxidantien, insbesondere N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexylp-phenylendiam in, N,N' - Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N(1-Methylheptyl)-N'-phenyl-p-phenylendiamin, N-Cyclohexyl-N'-phenyl-p-phenylendiamin,
d) Schwefelhaltigen Antioxidantien, insbesondere Distearylthiodipropionat, Dilauryldipropionat,
e) Hydroxylaminen, insbesondere N,N-Dialkylhydroxylamine, N,N-Dibenzylhydroxylamin, N,N-Dilaurylhydroxylamin, N,N-Distearyl-hydroxylamin, N-Benzyl-α-phenylnitron, N-Octadecyl-α-hexadecylnitron,
f) Gehinderten Aminen, insbesondere 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis-(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-di-chloro-1,3,5-triazin, Tris(2,2,6,6-tetramethyl-4-piperidyl)nitrilotriacetat, Tetrakis(2,2,6,6-tetra-methyl-4-piperidyl)-1,2,3,4-butantetracarboxylat, 1,1'-(1,2-Ethandiyl)-bis-(3,3,5,5-tetramethylpiperazinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

13. Kunststoffformmasse nach einem der Ansprüche 6 bis 12, **dadurch gekennzeichnet, dass** der mindestens eine Kunststoff ausgewählt ist aus der Gruppe bestehend aus
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-l, Polybutadien, Polyisopren, Polycycloocten, sowie Copolymere in Form von statistischen oder Blockstrukturen wie z.B. Polypropylen-Polyethylen (EP), EPM oder EPDM, Ethylen-Vinylacetat (EVA), Ethylen-Acrylester,
b) Polystyrol, Polymethylstyrol, Styrol-Butadien, Styrol-Butadien-Styrol (SBS), Styrolisopren, Styrol-Butadien-Acrylnitril (ABS), Styrol-Acrylnitril-Acrylat (ASA), Styrol-Maleinsäureanhydrid-Polymere einschließlich entsprechender Pfropfcopolymere, wie z.B. Styrol auf Butadien oder Maleinsäureanhydrid auf SBS,
c) Halogenenthaltende Polymere, wie z.B. Polyvinylchlorid und Polyvinylidenchlorid,
d) Polymere von ungesättigten Estern wie z.B. Polyacrylate und Polymethacrylate wie PMMA, Polyacrylnitril,
e) Polymere aus ungesättigten Alkoholen und Derivaten, wie z.B. Polyvinylalkohol, Polyvinylacetat. Polyvinylbutyral,
f) Polyacetale, wie z.B. Polyoxymethylen,
g) Polyphenylenoxide und Blends mit Polystyrol,
h) Polyurethane, insbesondere lineare Polyurethane,
i) Polyamide, wie z.B. Polyamid-6, 6.6., 6.10. 4.6, 4.10, 6.12,12.12., Polyamid 11, Polyamid 12 sowie (teil-)aromatische Polyamide wie z.B. Polyphthalamide,
j) Polyimide, Polyamidimide, Polyetherimide, Polyketone, Polysulfone, Polyethersulfone, Polyphenylensulfid,
k) Polyester, wie z.B. Polyethylenterephthalat und Polybutylenterephthalat, Polymilchsäure,
l) Polycarbonat,
m) Cellulosederivate, wie z.B. Cellulosenitrat, Celluloseacetat, Cellulosepropionat,
n) sowie Mischungen, Kombinationen oder Blends aus zwei oder mehr der zuvor genannten Polymeren.

14. Kunststoffformmasse nach einem der Ansprüche 6 bis 13 in Form von Spritzgussteilen, Folien oder Filmen, Beschichtungen oder Lacken, Schäumen, Fasern, Kabeln, Kabelkanälen und Rohren, Profilen, Hohlkörpern, Bändchen, Membranen, wie z.B. Geomembranen, oder Klebstoffen, die über Extrusion, Spritzguss, Blasformen, Kalandrieren, Pressverfahren, Spinnprozesse, Rotomoulding oder Streich- und Beschichtungsprozesse hergestellt werden z.B. für die Elektro- und Elektronikindustrie, Bauindustrie, Transportindustrie, für medizinische Anwendungen, für Haushalts- und Elektrogeräte, Fahrzeugteile, Konsumartikel, Verpackungen, Möbel, Textilien.

## Claims

1. Use of a compound according to the general formulae I to IV 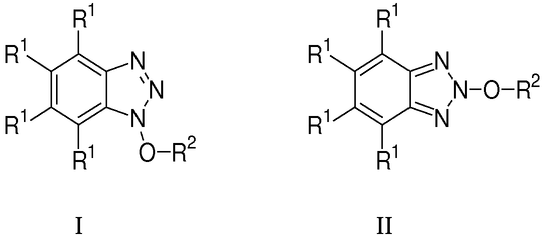 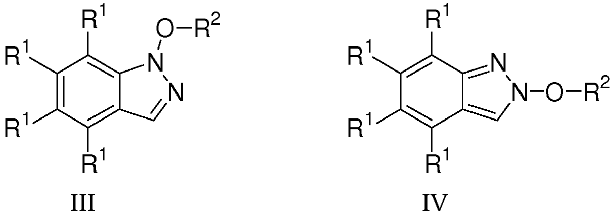 or a mixture of at least two compounds of the general formulae I to IV,
wherein, with each occurrence, respectively independently of each other,
R¹ is selected from the group consisting of hydrogen, alkyl radicals with 1 to 18 carbon atoms, partially or perfluorinated alkyl radicals with 1 to 18 carbon atoms, unsaturated organic radicals up to 1 to 18 carbon atoms, two vicinal radicals R¹ also being able to be joined to form a ring, -NO₂ -F, -Cl and -Br, and
R² is selected from the group consisting of mono-, bi- or trivalent inorganic or organic cations and hydrogen,
as flame retardant for plastic materials.

2. Use according to claim 1, **characterised in that** the mono-, di- or trivalent inorganic cations are selected from the group consisting of Li⁺, Na⁺, K⁺, ½ Mg²⁺, ½ Ca²⁺, 1/3 Al³⁺, ½ Zn²⁺ and/or the organic cations are selected from the group consisting of nitrogen- and/or phosphorus-containing organic cations, in particular ammonium, melaminium and/or phosphonium.

3. Use according to one of the preceding claims, **characterised in that**, with each occurrence, R¹ is hydrogen and/or R² is a mono- or bivalent inorganic cation, in particular K⁺.

4. Use according to one of the preceding claims, **characterised in that** the plastic material is selected from the group consisting of thermoplastic, elastomeric or duroplastic plastic materials, in particular
a) polymers made of olefins or diolefins, such as e.g. polyethylene (LDPE, LLDPE, VLDPE, ULDPE, MDPE, HDPE, UHMWPE), metallocene-PE (m-PE), polypropylene, polyisobutylene, poly-4-methylpentene-1, polybutadiene, polyisoprene, polycyclooctene, polyalkylene-carbon monoxide copolymers, and also copolymers in form of statistical or block structures, such as e.g. polypropylene-polyethylene (EP), EPM or EPDM, ethylene-vinyl acetate (EVA), ethylene-acrylester, such as e.g. ethylene-butylacrylate, ethylene-acrylic acid and the salts thereof (ionomers), and also terpolymers, such as e.g. ethylene-acrylic acid-glycidylacrylate, graft polymers, such as e.g. polypropylene-graft-maleic anhydride, polypropylene-graft-acrylic acid, polyethylene-graft-acrylic acid, polyethylene-polybutylacrylate-graft-maleic anhydride,
b) polystyrene, polymethylstyrene, polyvinylnaphthalene, styrene-butadiene (SB), styrene-butadiene-styrene (SBS), styrene-ethylene-butylene-styrene (SEBS), styrene-ethylene-propylene-styrene, styrene-isoprene, styrene-isoprene-styrene (SIS), styrene-butadiene-acrylonitrile (ABS), styrene-acrylonitrile-acrylate (ASA), styrene-ethylene, styrene-maleic anhydride polymers including corresponding graft copolymers, such as e.g. styrene on butadiene, maleic anhydride on SBS or SEBS, and also graft copolymers made of methylmethacrylate, styrene-butadiene and ABS (MABS),
c) halogen-comprising polymers, such as e.g. polyvinylchloride (PVC), polychloroprene and polyvinylidene chloride (PVDC), copolymers made of vinyl chloride and vinylidene chloride or of vinyl chloride and vinyl acetate, chlorinated polyethylene, polyvinylidene fluoride,
d) polymers made of unsaturated esters, such as e.g. polyacrylates and polymethacrylates, such as polymethylmethacrylate (PMMA), polybutylacrylate, polylaurylacrylate, polystearylacrylate, polyglycidylacrylate, polyglycidylmethacrylate, polyacrylonitrile, polyacrylamides, copolymers such as e.g. polyacrylonitrile-polyalkylacrylate,
e) polymers made of unsaturated alcohols and derivatives, such as e.g. polyvinyl alcohol, polyvinylacetate, polyvinylbutyral,
f) polyacetals, such as e.g. polyoxymethylene (POM) or copolymers with e.g. butanal,
g) polyphenylene oxides and blends with polystyrene or polyamides,
h) polymers of cyclic ethers, such as e.g. polyethylene glycol, polypropylene glycol, polyethylene oxide, polypropylene oxide,
i) polyurethanes, made of hydroxy-terminated polyethers or polyesters and aromatic or aliphatic isocyanates, in particular linear polyurethanes, polyureas,
j) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides, e.g. produced from terephthalic acid and/or isophthalic acid and aliphatic diamines or from aliphatic dicarboxylic acids, such as e.g. adipic acid or sebacic acid and aromatic diamines, such as e.g. 1,4- or 1,3-diaminobenzene, blends of different polyamides, such as e.g. PA-6 and PA 6.6 or blends of polyamides and polyolefins, such as e.g. PA/PP,
k) polyimides, polyamideimides, polyetherimides, polyesterimides, poly(ether)ketones, polysulphones, polyethersulphones, polyarylsulphones, polyphenylene sulphide, polybenzimidazoles, polyhydantoins,
l) polyesters made of aliphatic or aromatic dicarboxylic acids and diols or made of hydroxycarboxylic acids, such as e.g. polyethylene terephthalate (PET), polybutylene terephthalate (PBT), polypropylene terephthalate, polyethylene naphthylate, poly-1,4-dimethylolcyclohexane terephthalate, polyhydroxybenzoate, polyhydroxynaphthalate, polylactic acid (PLA), polyhydroxybutyrate (PHB), polyhydroxyvalerate (PHV),
m) polycarbonates, polyester carbonates, and also blends such as e.g. PC/ABS, PC/PBT, PC/PET/PBT, PC/PA,
n) cellulose derivatives, such as e.g. cellulose nitrate, cellulose acetate, cellulose propionate, cellulose butyrate,
o) non-thermoplastic or duroplastic plastic materials,
p) epoxy resins, consisting of di- or polyfunctional epoxy compounds in combination with e.g. hardeners based on amines, anhydrides, dicyanodiamide, mercaptans, isocyanates or catalytically acting hardeners,
q) phenol resins, such as e.g. phenol-formaldehyde resins, urea-formaldehyde resins, melamine-formaldehyde resins,
r) unsaturated polyester resins made of unsaturated dicarboxylic acids and diols,
s) silicones,
t) polyurethanes as reaction products from di- or polyfunctional isocyanates and polyols, polyureas,
u) alkyd resins, allyl resins,
v) and also mixtures, combinations or blends of two or more of the previously mentioned polymers.

5. Use according to one of the preceding claims, **characterised in that** the compound according to the general formulae I to IV and/or the mixture of at least two compounds of formula I to IV is mixed with the plastic material, the total content of the compound according to the general formulae I to IV in the resulting mixture being in particular 0.01 to 50% by weight, preferably 0.05 to 25% by weight.

6. Flame-retardant plastic material moulding compound, comprising at least one plastic material and also, as flame retardant, at least one compound according to the general formulae I to IV 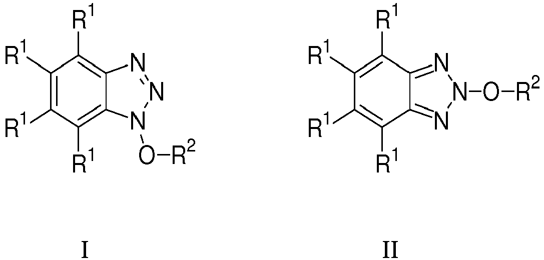 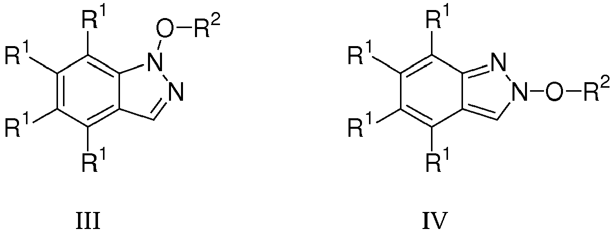 or a mixture of at least two compounds of the general formulae I and/or II, wherein, with each occurrence, respectively independently of each other,
R¹ is selected from the group consisting of hydrogen, alkyl radicals with 1 to 18 carbon atoms, partially or perfluorinated alkyl radicals with 1 to 18 carbon atoms, unsaturated organic radicals up to 1 to 18 carbon atoms, two vicinal radicals R¹ also being able to be joined to form a ring, -NO₂ -F, -Cl and -Br, and
R² is selected from the group consisting of mono-, bi- or trivalent inorganic or organic cations and hydrogen.

7. Plastic material moulding compound according to the preceding claim, **characterised in that** the total content of the at least one compound according to the general formulae I to IV in the plastic material moulding compound is 0.01 to 50% by weight, preferably 0.05 to 25% by weight.

8. Plastic material moulding compound according to one of the two preceding claims, **characterised in that** the plastic material moulding compound, in addition to the at least one compound according to the general formulae I to IV and the at least one plastic material, comprises in addition up to 70 parts by weight, preferably up to 25 parts by weight, relative to the totality of the at least one compound according to the general formulae I and II and of the at least one plastic material, of at least one further flame retardant, selected from the group consisting of phosphorus-containing, nitrogen-containing, inorganic, silicon-containing, boron-containing, sulphur-containing, halogen-containing and/or radical-forming flame retardants.

9. Plastic material moulding compound according to the preceding claim, **characterised in that** the at least one further flame retardant is selected preferably from the group consisting of
a) inorganic flame retardants, such as e.g. Al(OH)₃, Mg(OH)₂, AlO(OH), MgCO₃, layer silicates, such as e.g. montmorillonite or sepiolite, organically- or unmodified double salts, such as e.g. Mg-Al silicates, POSS- (polyhedral oligomeric silsesquioxane) compounds, huntite, hydromagnesite or halloysite and also Sb₂O₃, Sb₂O₅, MoO₃, zinc stannate, zinc hydroxystannate,
b) nitrogen-containing flame retardants, such as e.g. melamine, melem, melam, melon, melamine derivates, melamine condensation products or melamine salts, benzoguanamine, polyisocyanurates, allantoin, phosphacenes, in particular melamine cyanurate, melamine phosphate, dimelamine phosphate, melamine pyrophosphate, melamine polyphosphate, melamine methane phosphonate, melamine-metal phosphates, such as e.g. melamine aluminium phosphate, melamine zinc phosphate, melamine magnesium phosphate, and also the corresponding pyrophosphates and polyphosphates, ethylene diamine methane phosphonate, poly-[2,4-(piperazin-1,4-yl)-6-(morpholin-4-yl)-1,3,5-triazine], ammonium polyphosphate, melamine borate, melamine hydrobromide,
c) phosphorus-containing flame retardants, such as e.g. red phosphorus, phosphates, such as e.g. resorcin diphosphate, bisphenol-A-diphosphate and the oligomers thereof, triphenylphosphate, ethylene diamine diphosphate, phosphonates such as e.g. salts of hypophosphorous acid and the derivates thereof, such as alkylphosphinate salts, e.g. diethylaluminium phosphinate, diethylphosphinate zinc or aluminium phosphinate, aluminium phosphite, aluminium phosphonate, aluminium phosphate, phosphonate esters, oligomeric and polymeric derivatives of methane phosphonic acid, 9,10-dihydro-9-oxa-10-phosphorylphenanthrene-10-oxide (DOPO) and the substituted compounds thereof, phosphacenes, in particular polymeric phosphacenes,
d) halogen-containing flame retardants based on chlorine and bromine, such as e.g. polybrominated diphenyl oxides, such as e.g. decabromodiphenyl oxide, tris(3-bromo-2,2-bis(bromomethyl)propylphosphate, tris(tribromoneopentyl)phosphate, tetrabromophthalic acid, 1,2-bis(tribromophenoxy)ethane, hexabromocyclododecane, brominated diphenylethane, tris-(2,3-dibromopropyl)isocyanurate, ethylene-bis(tetrabromophthalimide), tetrabromobisphenol A, tetrabromobisphenol-A-bis(2,3-dibromopropyl ether), brominated polystyrene, brominated polybutadiene or polystyrene, brominated polybutadiene copolymers, brominated epoxy resin, brominated polyphenylene ether, polypentabromobenzylacrylate, possibly in combination with Sb₂O₃ and/or Sb₂O₅,
e) borates, such as e.g. zinc borate or calcium borate, possibly on carrier materials such as silica,
f) sulphur-containing flame-retardants, such as e.g. elementary sulphur, disulphides and polysulphides, thiuramsulphide, dithiocarbamates, mercaptobenzothiazole and sulphenamides,
g) anti-drip agents, such as e.g. polytetrafluoroethylene,
h) silicon-containing compounds, such as e.g. polyphenylsiloxanes, and/or
i) radical-forming flame-retardants, such as e.g. alkoxyamines, hydroxylamine esters, azo compounds, dicumyl or polycumyl, hydroxyimides or the derivates thereof, such as e.g. hydroxyamide ester or hydroxyimide ether,
j) carbon modifications, such as e.g. carbon nanotubes (CNT) or graphene.

10. Plastic material moulding compound according to one of the claims 6 to 9, **characterised in that** it comprises additives selected from the group consisting of UV absorbers, light stabilisers, stabilisers, such as benzofuranones, nucleation agents, impact strength enhancers, plasticisers, lubricants, rheology modifiers, processing aids, pigments, colourants, optical brighteners, antimicrobial active substances, antistatic agents, slipping means, antiblocking means, coupling agents, dispersants, compatibilisers, oxygen collectors, marking means, antifogging means or acid collectors, preferably acid collectors based on salts of long-chain acids, such as e.g. calcium stearate, magnesium stearate, zinc stearate, aluminium stearate, calcium lactate, calcium stearoyl-2-lactylates or on hydrotalcites.

11. Plastic material moulding compound according to one of the claims 6 to 10, **characterised in that** that the plastic material moulding compound, in addition to the at least one compound according to the general formulae I to IV and the at least one plastic material, comprises in addition 0.01 to 10% parts by weight, preferably 0.05 to 3 parts by weight, relative to the totality of the at least one compound according to the general formulae I and II and of the at least one plastic material, of at least one stabiliser, selected from the group consisting of phenolic antioxidants, phosphites/ phosphonites, aminic antioxidants, sulphur-containing antioxidants or hydroxylamines.

12. Plastic material moulding compound according to the preceding claim, **characterised in that** the at least one stabiliser is selected from the group consisting of
a) phenolic antioxidants, in particular octadecyl-3-(3,5-di-*tert-*butyl-4-hydroxyphenyl)propionate, pentaerythritoltetrakis[3-(3,5-di-*tert*-butyl-4-hydroxyphenyl)propionate, tris(3,5-di-*tert*-butyl-4-hydroxyphenyl)isocyanurate, 1,3,5-trimethyl-2,4,6-tris(3,5-di-*tert*-butyl-4-hydroxyphenyl)isocyanurate, 1,3,5-trimethyl-2,4,6-tris(3,5-di-*tert*-butyl-4-hydroxybenzyl)benzene, triethylene glycol-bis[3-(3-*tert*-butyl-4-hydroxy-5-methylphenyl)propionate, N,N'-hexane-1,6-diyl-bis[3-(3,5-di-*tert*-butyl-4-hydroxyphenyl)propionic acid amide,
b) phosphites/phosphonites, in particular tris-(2,4-di-*tert-*butylphenyl)phosphite, diisodecylpentaerythritol diphosphite, bis(2,4-di-*tert*-butylphenyl)pentaerythritol diphosphite, bis(2,4-di-cumylphenyl)pentaerythritol diphosphite, bis(2,6-di-*tert*-butyl-4-methylphenyl)pentaerythritol diphosphite, diisodecyloxypentaerythritol diphosphite, bis(2,4-di-*tert-*butyl-6-methylphenyl)pentaerythritol diphosphite, bis(2,4,6-tris(*tert*-butylphenyl)pentaerythritol diphosphite, tetrakis(2,4-di-*tert*-butylphenyl)-4,4'-biphenylene diphosphonite,
c) aminic antioxidants, in particular N,N'-diisopropyl-p-phenylene diamine, N,N'-di-*sec*-butyl-p-phenylene diamine, N,N'-bis(1,4-dimethylpentyl)-p-phenylene diamine, N,N'-bis(1-ethyl-3-methylpentyl)-p-phenylene diamine, N,N'-bis(1-methylheptyl)-p-phenylene diamine, N,N'-dicyclohexyl-p-phenylene diamine, N,N'-diphenyl-p-phenylene diamine, N,N'-bis(2-naphthyl)-p-phenylene diamine, N-isopropyl-N'-phenyl-p-phenylene diamine, N-(1,3-dimethylbutyl)-N'-phenyl-p-phenylene diamine, N-(1-methylheptyl)-N'-phenyl-p-phenylene diamine, N-cyclohexyl-N'-phenyl-p-phenylene diamine,
d) sulphur-containing antioxidants, in particular distearylthiodipropionate, dilauryldipropionate,
e) hydoxyamines, in particular N,N-dialkylhydroxylamines, N,N-dibenzylhydroxylamine, N,N-dilaurylhydroxylamine, N,N-distearylhydroxylamine, N-benzyl-α-phenylnitron, N-octadecyl-α-hexadecylnitron,
f) hindered amines, in particular 1,1-bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzylmalonate, the condensation product of 1-(2-hydroxyethyl)-2,2,6,6-tetramethyl-4-hydroxypiperidine and succinic acid, linear or cyclic condensation products of N,N'-bis(2,2,6,6-tetramethyl-4-piperidyl)hexamethylene diamine and 4-*tert*-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, linear or cyclic condensation products of N,N'-bis(2,2,6,6-tetramethyl-4-piperidyl)hexamethylene diamine and 4-morpholino-2,6-dichloro-1,3,5-triazine, the reaction product of 7,7,9,9-tetramethyl-2-cycloundecyl-1-oxa-3,8-diaza-4-oxospiro-[4,5]decane and epichlorohydrin.

13. Plastic material moulding compound according to one of the claims 6 to 12, **characterised in that** the at least one plastic material is selected from the group consisting of
a) polymers made of olefins or diolefins, such as e.g. polyethylene (LDPE, LLDPE, VLDPE, MDPE, HDPE), polypropylene, polyisobutylene, poly-4-methylpentene-1, polybutadiene, polyisoprene, polycyclooctene, and also copolymers in the form of statistical or block structures, such as e.g. polypropylene-polyethylene (EP), EPM or EPDM, ethylene-vinyl acetate (EVA), ethylene-acrylester,
b) polystyrene, polymethylstyrene, styrene-butadiene (SBS), styrene-isoprene, styrene-butadiene-acrylonitrile (ABS), styrene-acrylonitrile-acrylate (ASA), styrene-maleic anhydride polymers including corresponding graft copolymers, such as e.g. styrene on butadiene or maleic anhydride on SBS,
c) halogen-comprising polymers, such as e.g. polyvinylchloride and polyvinylidene chloride,
d) polymers of unsaturated esters, such as e.g. polyacrylates and polymethacrylates, such as PMMA, polyacrylonitrile,
e) polymers made of unsaturated alcohols and derivatives, such as e.g. polyvinyl alcohol, polyvinylacetate, polyvinylbutyral,
f) polyacetals, such as e.g. polyoxymethylene,
g) polyphenylene oxides and blends with polystyrene,
h) polyurethanes, in particular linear polyurethanes,
i) polyamides, such as e.g. polyamide-6, 6.6, 6.10, 4.6, 4.10, 6.12, 12.12, polyamide 11, polyamide 12 and also (partially) aromatic polyamides, such as e.g. polyphthalamides,
j) polyimides, polyamideimides, polyetherimides, polyketones, polysulphones, polyethersulphones, polyphenylene sulphide,
k) polyesters such as e.g. polyethylene terephthalate and polybutylene terephthalate, polylactic acid,
l) polycarbonate,
m) cellulose derivatives, such as e.g. cellulose nitrate, cellulose acetate, cellulose propionate,
n) and also mixtures, combinations or blends of two or more of the previously mentioned polymers.

14. Plastic material moulding compound according to one of the claims 6 to 13, in the form of injection moulded parts, foils or films, coatings or paints, foams, fibres, cables, cable ducts and pipes, profiles, hollow bodies, strips, membranes, such as e.g. geomembranes, or adhesives, which are produced via extrusion, injection moulding, blow-moulding, calendering, pressing processes, spinning processes, rotomoulding or brushing- and coating processes, e.g. for the electrical and electronics industry, construction industry, transport industry, for medical applications, for household- and electrical appliances, vehicle parts, consumer articles, packaging, furniture, textiles.

## Revendications

1. Utilisation, en tant que retardateur de flamme pour matières plastiques, d'un composé selon les formules générales I à IV 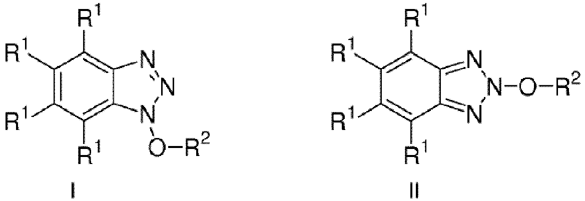 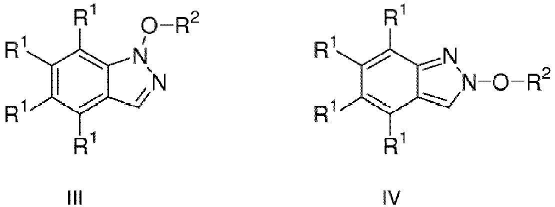 ou d'un mélange d'au moins deux composés de formules générales I à IV,
dans lesquelles, pour chaque occurrence, et indépendamment les uns des autres R¹ est choisi dans le groupe consistant en l'atome d'hydrogène, les radicaux alkyle ayant 1 à 18 atomes de carbone, les radicaux alkyle partiellement fluorés ou perfluorés ayant 1 à 18 atomes de carbone, les radicaux organiques insaturés ayant 1 à 18 atomes de carbone, deux radicaux R¹ voisins pouvant aussi être reliés pour former un cycle, -NO₂, - F, -Cl et -Br, et
R² est choisi dans le groupe consistant en les cations inorganiques ou organiques monovalents, divalents ou trivalents, et l'atome d'hydrogène.

2. Utilisation selon la revendication 1, **caractérisée en ce que** les cations inorganiques monovalents, divalents ou trivalents sont choisis dans le groupe consistant en Li⁺, Na⁺, K⁺, ½ Mg²⁺, ½ Ca²⁺, 1/3 Al³⁺, ½ Zn²⁺ et/ou les cations organiques sont choisis dans le groupe consistant en les cations organiques azotés et/ou phosphorés, en particulier les cations ammonium, mélaminium et/ou phosphonium.

3. Utilisation selon l'une des revendications précédentes, **caractérisée en ce que**, pour chaque occurrence, R¹ représente un atome d'hydrogène et/ou R² représente un cation inorganique monovalent ou divalent, en particulier K⁺.

4. Utilisation selon l'une des revendications précédentes, **caractérisée en ce que** la matière plastique est choisie dans le groupe consistant en les matières plastiques thermoplastiques, élastomères ou thermodurcissables, en particulier
a) les polymères obtenus à partir d'oléfines ou de dioléfines, telles que par exemple le polyéthylène (PEBD, PEBDL, VLDPE, ULDPE, MDPE, PEHD, UHMWPE), le métallocène-PE (m-PE), le polypropylène, le polyisobutylène, le poly-4-méthyl-pentène-1, le polybutadiène, le polyisoprène, le polycyclooctène, les copolymères polyalkylène-monoxyde de carbone, ainsi que les copolymères sous forme de structures statistiques ou en blocs, tels que par exemple le polypropylène-polyéthylène (EP), l'EPM ou l'EPDM, l'éthylène-acétate de vinyle (EVA), les esters éthylène-acryliques tels que par exemple l'éthylène-acrylate de butyle, l'éthylène-acide acrylique et les sels (ionomères) de ceux-ci, ainsi que le terpolymères tels que par exemple l'éthylène-acide acrylique-acrylate de glycidyle, les polymères greffés tels que par exemple le polypropylène-greffé-acide acrylique, le polyéthylène-greffé-acide acrylique, le polyéthylène-poly(acrylate de butyle)-grefféanhydride maléique,
b) le polystyrène, le polyméthylstyrène, le polyvinylnaphtalène, les polymères styrène-butadiène (SB), styrène-butadiène-styrène (SBS), styrène-éthylène-butylène-styrène (SEBS), styrène-éthylène-propylène-styrène, styrène-isoprène, styrène-isoprène-styrène (SIS), styrène-butadiène-acrylonitrile (ABS), styrène-acrylonitrile-acrylate (ASA), styrène-éthylène, styrène-anhydride maléique, y compris les copolymères greffés correspondants tels que par exemple styrène sur butadiène, anhydride maléique sur SBS ou SEBS, ainsi que les copolymères greffés constitués de méthacrylate de méthyle, de styrène-butadiène et d'ABS (MABS),
c) les polymères halogénés tels que par exemple le poly(chlorure de vinyle) (PVC), le polychloroprène et le poly(chlorure de vinylidène) (PVDC), les copolymères de chlorure de vinyle et de chlorure de vinylidène ou de chlorure de vinyle et d'acétate de vinyle, le polyéthylène chloré, le poly(fluorure de vinylidène),
d) les polymères d'esters insaturés tels que par exemple les polyacrylates et les polyméthacrylates tels que le poly(méthacrylate de méthyle) (PMMA), le poly(acrylate de butyle), le poly(acrylate de lauryle), le poly(acrylate de stéaryle), le poly(acrylate de glycidyle), le poly(méthacrylate de glycidyle), le polyacrylonitrile, les polyacrylamides, les copolymères tels que par exemple le polyacrylonitrile-poly(acrylate d'alkyle),
e) les polymères d'alcools insaturés et de leurs dérivés, tels que par exemple le poly(alcool vinylique), le poly(acétate de vinyle), le polyvinylbutyral,
f) les polyacétals, tels que par exemple le polyoxyméthylène (POM) ou les copolymères avec par exemple le butanal,
g) les poly(oxydes de phénylène) et les mélanges avec le polystyrène ou les polyamides,
h) les polymères d'éthers cycliques tels que le polyéthylèneglycol, le polypropylèneglycol, le poly(oxyde d'éthylène), le poly(oxyde de propylène),
i) les polyuréthannes, obtenus à partir de polyéthers ou de polyesters à terminaison hydroxy et d'isocyanates aromatiques ou aliphatiques, en particulier les polyuréthannes linéaires, les polyurées,
j) les polyamides tels que par exemple les polyamides-6,6.6, 6.10, 4.6, 4.10, 6.12, 12.12, le polyamide 11, le polyamide 12, ainsi que les polyamides (partiellement) aromatiques tels que par exemple les polyphtalamides, fabriqués par exemple à partir d'acide téréphtalique et/ou d'acide isophtalique et de diamines aliphatiques, ou à partir d'acides dicarboxyliques aliphatiques tels que par exemple l'acide adipique ou l'acide sébacique et de diamines aromatiques telles que par exemple le 1,4- ou le 1,3-diaminobenzène, les mélanges de différents polyamides tels que le PA-6 et le PA-6.6, ou les mélanges de polyamides et de polyoléfines telles que par exemple le PA/PP,
k) les polyimides, les polyamide-imides, les polyétherimides, les polyesterimides, les poly(éther)cétones, les polysulfones, les polyéthersulfones, les polyarylsulfones, le poly(sulfure de phénylène), les polybenzimidazoles, les polyhydantoïnes,
l) les polyesters obtenus à partir d'acides dicarboxyliques aliphatiques ou aromatiques et de diols ou d'acides hydroxycarboxyliques tels que par exemple le poly(téréphtalate d'éthylène) (PET), le poly(téréphtalate de butylène) (PBT), le poly(téréphtalate de propylène), le poly(naphtylate d'éthylène), le poly(téréphtalate de 1,4-diméthylolcyclohexane), le poly(hydroxybenzoate), le poly(hydroxynaphtalate), le poly(acide lactique) (PLA), le polyhydroxybutyrate (PHB), le polyhydroxyvalérate (PHV),
m) les polycarbonates, les polyestercarbonates, ainsi que les mélanges tels que par exemple le PC/ABS, le PC/PBT, le PC/PET/PBT, le PC/PA,
n) les dérivés de la cellulose tels que par exemple le nitrate de cellulose, l'acétate de cellulose, le propionate de cellulose, le butyrate de cellulose,
o) les matières plastiques non-thermoplastiques ou thermodurcissables,
p) les résines époxydes, constituées de composés époxy di- ou polyfonctionnels en combinaison par exemple avec des durcisseurs à base d'amines, d'anhydrides, de dicyanodiamide, de mercaptans, d'isocyanates ou de durcisseurs à action catalytique,
q) les résines phénoliques telles que par exemple les résines de phénolformaldéhyde, les résines d'urée-formaldéhyde, les résines de mélamine-formaldéhyde,
r) les résines de polyester insaturées, obtenues à partir d'acides dicarboxyliques insaturés et de diols,
s) les silicones,
t) les polyuréthannes, en tant que produits de la réaction d'isocyanates di- ou polyfonctionnels et de polyols, les polyurées,
u) les résines alkydes, les résines allyliques,
v) ainsi que les mélanges, combinaisons ou mélanges mécaniques de deux des polymères mentionnés ci-dessus, ou plus.

5. Utilisation selon l'une des revendications précédentes, **caractérisée en ce que** l'on mélange aux matières plastiques le composé selon les formules générales I à IV et/ou le mélange d'au moins deux composés de formules I à IV, la teneur totale du mélange obtenu en le composé selon les formules générales I à IV étant en particulier de 0,01 à 50 % en poids, de préférence de 0,05 à 25 % en poids.

6. Mélange à mouler de matières plastiques ignifugé contenant au moins une matière plastique ainsi que, en tant que retardateur de flamme, au moins un composé selon les formules générales I à IV, 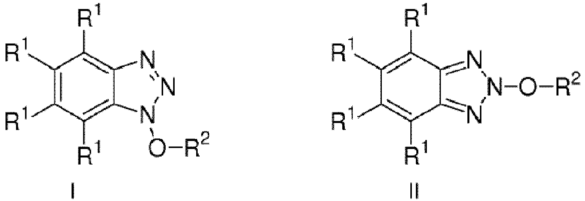 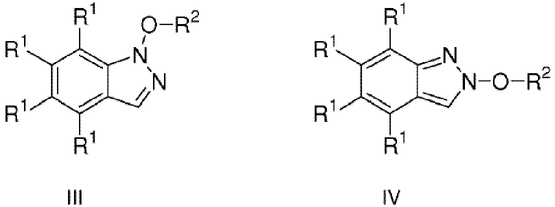 ou un mélange d'au moins deux composés de formules générales I et/ou II,
dans lesquelles, pour chaque occurrence, et indépendamment les uns des autres R¹ est choisi dans le groupe consistant en l'atome d'hydrogène, les radicaux alkyle ayant 1 à 18 atomes de carbone, les radicaux alkyle partiellement fluorés ou perfluorés ayant 1 à 18 atomes de carbone, les radicaux organiques insaturés ayant 1 à 18 atomes de carbone, deux radicaux R¹ voisins pouvant aussi être reliés pour former un cycle, -NO₂, - F, -Cl et -Br, et
R² est choisi dans le groupe consistant en les cations inorganiques ou organiques monovalents, divalents ou trivalents, et l'atome d'hydrogène.

7. Mélange à mouler de matières plastiques selon la revendication précédente, **caractérisé en ce que** la teneur totale du mélange à mouler de matières plastiques en l'au moins un composé selon les formules générales I à IV est de 0,01 à 50 % en poids, de préférence de 0,05 à 25 % en poids.

8. Mélange à mouler de matières plastiques selon l'une des revendications précédentes, **caractérisé en ce que** le mélange à mouler de matières plastiques contient, en plus de l'au moins un composé selon les formules générales I à IV et de l'au moins une matière plastique, jusqu'à 70 % en poids, de préférence jusqu'à 25 % en poids, par rapport à la totalité de l'au moins un composé selon les formules générales I et II et de l'au moins une matière plastique, d'au moins un retardateur de flamme supplémentaire, choisi dans le groupe consistant en les retardateurs de flamme phosphorés, azotés, inorganiques, contenant du silicium, contenant du bore, sulfurés, halogénés et/ou formant des radicaux.

9. Mélange à mouler de matières plastiques selon la revendication précédente, **caractérisé en ce que** l'au moins un retardateur de flamme supplémentaire est choisi dans le groupe consistant en
a) les retardateurs de flamme inorganiques tels que Al(OH)₃, Mg(OH)₂, AIO(OH), MgCO₃, les phyllosilicates tels que par exemple la montmorillonite ou la sépiolite, les sels doubles non-modifiés ou à modification organique, tels que par exemple les silicates de Mg-AI, les composés POSS-(silsesquioxanes oligomères polyédriques), la huntite, l'hydromagnésite ou la halloysite, ainsi que Sb₂O₃, Sb₂O₅, MoO₃, le stannate de zinc, l'hydroxystannate de zinc,
b) les retardateurs de flamme azotés tels que par exemple la mélamine, le mélem, le mélam, le mélon, les dérivés de la mélamine, les produits de condensation de la mélamine ou les sels de mélamine, la benzoguanamine, les polyisocyanurates, l'allantoïne, les phosphacènes, en particulier le cyanurate de mélamine, le phosphate de mélamine, le phosphate de dimélamine, le pyrophosphate de mélamine, le polyophosphate de mélamine, le méthanephosphonate de mélamine, les phosphates de mélamine et de métaux tels que par exemple le phosphate de mélamine-aluminium, le phosphate de mélamine-zinc, le phosphate de mélamine-magnésium, ainsi que les pyrophosphates et les polyphosphates correspondants, le méthanephosphonate d'éthylènediamine, la poly([2,4-(pipérazine-1,4-yl)-6-(morpholin-4-yl)-1,3,5-triazine], le polyphosphate d'ammonium, le borate de mélamine, le bromhydrate de mélamine,
c) les retardateurs de flamme phosphorés, tels que par exemple le phosphore rouge, les phosphates tels que par exemple le diphosphate de résorcinol, le diphosphate de bisphénol A et leurs oligomères, le phosphate de triphényle, le diphosphate d'éthylènediamine, les phosphinates tels que par exemple les sels de l'acide hypophosphoreux et ses dérivés tels que les sels phosphinates d'alkyle, par exemple le phosphinate de diéthylaluminium, le phosphinate de diéthyl-zinc ou le phosphinate d'aluminium, le phosphite d'aluminium, le phosphonate d'aluminium, le phosphate d'aluminium, les esters de phosphonates, les dérivés oligomères et polymères de l'acide méthanephosphonique, l'oxyde de 9,10-dihydro-9-oxa-10-phosphorylphénanthrène-10 (DOPO) et ses composés substitués, les phosphacènes, en particulier les phosphacènes polymères,
d) les retardateurs de flamme halogénés à base de chlore et de brome, tels que par exemple les oxydes de diphényle polybromés, tels que par exemple l'oxyde de décabromodiphényle, le phosphate de tris(3-bromo-2,2-bis(bromométhyl)propyle, le phosphate de tris(tribromonéopentyle), l'acide tétrabromophtalique, le 1,2-bis(tribromophénoxy)éthane, l'hexabromocyclododécane, le diphényléthane bromé, l'isocyanurate de tris(2,3-dibromopropyle), l'éthylène-bis(tétrabromophtalimide), le tétrabromo-bisphénol A, l'éther bis(2,3-dibromopropylique) du tétrabromo-bisphénol A, le polystyrène bromé, le polybutadiène ou le polystyrène bromé, les copolymères de polybutadiène bromé, une résine époxyde bromée, le poly(phénylène éther) bromé, le poly(acrylate de pentabromobenzyle), éventuellement en combinaison avec du Sb₂O₃ et/ou du Sb₂O₅,
e) les borates, tels que par exemple le borate de zinc ou le borate de calcium, éventuellement sur des matériaux supports tels que la silice,
f) les retardateurs de flamme sulfurés tels que par exemple le soufre élémentaire, les disulfures et les polysulfures, le sulfure de thiurame, les dithiocarbamates, le mercaptobenzothiazole et les sulfénamides,
g) les agents anti-goutte, tels que par exemple le polytétrafluoréthylène,
h) les composés contenant du silicium, tels que par exemple les polyphénylsiloxanes et/ou
i) les retardateurs de flamme formant des radicaux tels que par exemple les alcoxyamines, les esters d'hydroxylamine, les composés azoïques, le dicumyle ou le polycumyle, les hydroxyimides ou les dérivés de ceux-ci, tels que par exemple les esters d'hydroxyimides ou les éthers d'hydroxyimide,
j) les modifications du carbone, tels que par exemple les nanotubes de carbone (CNT) ou le graphène.

10. Mélange à mouler de matières plastiques selon l'une des revendications 6 à 9, **caractérisé en ce qu'**il contient des additifs choisis dans le groupe consistant en les absorbants UV, les photostabilisants, les stabilisants tels que les benzofurannones, les agents de nucléation, les agents améliorant la résistance au choc, les plastifiants, les lubrifiants, les agents modifiant la rhéologie, les auxiliaires de mise en oeuvre, les pigments, les colorants, les azurants optiques, les matières actives antimicrobiennes, les antistatiques, les agents de glissement, les agents anti-adhérence de contact, les agents de couplage, les dispersants, les agents de compatibilisation, les fixateurs d'oxygène, les agents de marquage, les agents antivoile ou les fixateurs d'acides, de préférence les fixateurs d'acides à base de sels d'acides à longue chaîne tels que par exemple le stéarate de calcium, le stéarate de magnésium, le stéarate de zinc, le stéarate d'aluminium, le lactate de calcium, le stéaroyl-2-lactylate de calcium, ou les hydrotalcites.

11. Mélange à mouler de matières plastiques selon l'une des revendications 6 à 10, **caractérisé en ce que** le mélange à mouler de matières plastiques contient, en plus de l'au moins un composé selon les formules générales I à IV et l'au moins une matière plastique, encore 0,01 à 10 parties en poids, de préférence 0,05 à 3 parties en poids, par rapport à la totalité de l'au moins un composé selon les formules générales I et II et de l'au moins une matière plastique, d'au moins un stabilisant choisi dans le groupe consistant en les antioxydants phénoliques, les phosphites/phosphonites, les antioxydants aminés, les antioxydants sulfurés ou les hydroxylamines.

12. Mélange à mouler de matières plastiques selon la revendication précédente, **caractérisé en ce que** l'au moins un stabilisant est choisi dans le groupe consistant en :
a) les antioxydants phénoliques, en particulier le 3-(3,5-di-*tert*-butyl-4-hydroxyphényl)propionate d'octadécyle, le tétrakis[3-(3,5-di-*tert-*butyl-4-hydroxyphény]propionate de pentaérythritol, l'isocyanurate de tris(3,5-di-*tert*-butyl-4-hydroxyphényle), l'isocyanurate de 1,3,5-triméthyl-2,4,6-tris(3,5-di-tertbutyl-4-hydroxyphényle), le 1,3,5-triméthyl-2,4,6-tris(3,5-di-*tert*-butyl-4-hydroxybenzyl)benzène, le bis[3-(3-*tert*-butyl-4-hydroxy-5-méthylphényl]propionate de triéthylèneglycol, le N,N'-hexane-1,6-diyl-bis[3-(3,5-di-*tert*-butyl-4-hydroxyphényl]propionamide,
b) les phosphites/phosphonites, en particulier le phosphate de tris(2,4-di-*tert*-butyl-phényle), le diphosphite de diisodécylpentaérythritol, le diphosphite de bis(2,4-di-*tert*-butyl-phényl)pentaérythritol, le diphosphite de bis(2,4-di-cumyl-phényl)pentaérythritol, le diphosphite de bis(2,6-di-*tert*-butyl-4-méthyl-phényl)pentaérythritol, le diphosphite de diisodécyloxypentaérythritol, le diphosphite de bis(2,4-di-*tert*-butyl-6-méthylphényl)pentaérythritol, le diphosphite de bis(2,4,6-tris(*tert*-butylphényl)pentaérythritol), le 4,4'-biphénylène diphosphonite de tétrakis(2,4-di-*tert*-butylphényle),
c) les antioxydants aminés, en particulier la N,N'-di-isopropyl-p-phénylènediamine, la N,N'-di-sec-butyl-p-phénylènediamine, la N,N'-bis(1,4-diméthylpentyl)-p-phénylènediamine, la N,N'-bis(1-éthyl-3-méthylpentyl)-p-phénylènediamine, la N,N'-bis(1-méthylheptyl)-p-phénylènediamine, la N,N'-dicyclohexyl-p-phénylènediamine, la N,N'-diphényl-p-phénylènediamine, la N,N'-bis(2-naphtyl)-p-phénylènediamine, la N-isopropyl-N'-phényl-p-phénylènediamine, la N-(1,3-diméthylbutyl)-N'-phényl-p-phénylène-diamine, la N-(1-méthylheptyl)-N'-phényl-p-phénylènediamine, la N-cyclohexyl-N'-phényl-p-phénylènediamine,
d) les antioxydants sulfurés, en particulier le thiodipropionate de distéaryle, le dipropionate de dilauryle,
e) les hydroxylamines, en particulier les N,N-dialkylhydroxylamines, la N,N-dibenzylhydroxylamine, la N,N-dilaurylhydroxylamine, la N,N-distéarylhydroxylamine, la N-benzyl-α-phénylnitrone, la N-octadécyl-α-hexadécylnitrone,
f) les amines à empêchement stérique, en particulier le succinate de 1,1-bis(2,2,6,6-tétraméthyl-4-pipéridyle, le sébaçate de bis(1,2,2,6,6-pentaméthyl-4-pipéridyle, le sébaçate de bis(1-octyloxy-2,2,6,6-tétraméthyl-4-pipéridyle), le n-butyl-3,5-di-*tert* butyl-4-hydroxybenzylmalonate de bis(1,2,2,6,6-pentaméthyl-4-pipéridyle), le produit de condensation de la 1-(2-hydroxyéthyl)-2,2,6,6-tétraméthyl-4-hydroxypipéridine et l'acide succinique, les produits de condensation linéaires ou cycliques de la N,N'-bis(2,2,6,6-tétraméthyl-4-pipéridyl)hexaméthylènediamine et de la 4-*tert*-octylamino-2,6-di-chloro-1,3,5-triazine, le nitrilotriacétate de tris(2,2,6,6-tétraméthyl-4-pipéridyle), le 1,2,3,4-butanetétracarboxylate de tétrakis(2,2,6,6-tétra-méthyl-4-pipéridyle), la 1,1'-(1,2-éthanediyle)-bis(3,3,5,5-tétraméthylpipérazinone, la 4-benzoyl-2,2,6,6-tétraméthyl-pipéridine, la 4-stéaryloxy-2,2,6,6-tétraméthylpipéridine, les produits de condensation linéaires ou cycliques de la N,N'-bis(2,2,6,6-tétraméthyl-4-pipéridyl)-hexaméthylènediamine et de la 4-morpholino-2,6-dichloro-1,3,5-triazine, le produit de la réaction du 7,7,9,9-tétra-méthyl-2-cycloundécyl-1-oxa-3,8-diaza-4-oxospiro[4,5]décane et de l'épichlorhydrine.

13. Mélange à mouler de matières plastiques selon l'une des revendications 6 à 12, **caractérisé en ce que** l'au moins une matière plastique est choisie dans le groupe consistant en
a) les polymères d'oléfines ou de dioléfines, tels que par exemple le polyéthylène (PEBD, PEBDL, VLDPE, MDPE, PEHD), le polypropylène, le polyisobutylène, le poly-4-méthyl-pentène-1, le polybutadiène, le polyisoprène, le polycyclooctène, ainsi que les copolymères sous forme de structures statistiques ou en blocs, tels que par exemple le polypropylène-polyéthylène (EP), l'EPM ou l'EPDM, l'éthylène-acétate de vinyle (EVA), l'éthylène-ester d'acide acrylique,
b) le polystyrène, le polyméthylstyrène, les polymères styrène-butadiène, styrène-butadiène-styrène (SBS), styrène-isoprène, styrène-butadiène-acrylonitrile (ABS), styrène-acrylonitrile-acrylate (ASA), styrène-anhydride maléique y compris les copolymères greffés correspondants, tels que par exemple le styrène sur le butadiène ou l'anhydride maléique sur le SBS,
c) les polymères halogénés, tels que par exemple le poly(chlorure de vinyle) et le poly(chlorure de vinylidène),
d) les polymères d'esters insaturés tels que par exemple les polyacrylates et les polyméthacrylates tels que le PMMA, le polyacrylonitrile,
e) les polymères d'alcools insaturés et de leurs dérivés, tels que par exemple le poly(alcool vinylique), le poly(acétate de vinyle), le polyvinylbutyral,
f) les polyacétals, tels que par exemple le polyoxyméthylène,
g) les poly(oxydes de phénylène) et les mélanges avec le polystyrène,
h) les polyuréthannes, en particulier les polyuréthannes linéaires,
i) les polyamides, tels que par exemple les polyamides-6, 6.6, 6.10, 4.6, 4.10, 6.12, 12.12, le polyamide 11, le polyamide 12, ainsi que les polyamides (partiellement)aromatiques tels que par exemple les polyphtalamides,
j) les polyimides, les polyamide-imides, les polyétherimides, les polycétones, les polysulfones, les polyéthersulfones, le poly(sulfure de phénylène),
k) les polyesters, tels que par exemple le poly(téréphtalate d'éthylène) et le poly(téréphtalate de butylène), le poly(acide lactique),
l) le polycarbonate,
m) les dérivés de la cellulose, tels que par exemple le nitrate de cellulose, l'acétate de cellulose, le propionate de cellulose,
n) ainsi que les mélanges, combinaisons ou mélanges mécaniques de deux des polymères mentionnés ci-dessus, ou plus.

14. Mélange à mouler de matières plastiques selon l'une des revendications 6 à 13 sous forme de pièces moulées par injection, de feuilles ou de films, de revêtements ou de vernis, de mousses, de fibres, de câbles, de canaux de câbles et de tubes, de profilés, de corps creux, de bandelettes, de membranes, telles que par exemple les géomembranes, ou d'adhésifs, qui sont fabriqués par extrusion, moulage par injection, moulage par soufflage, calandrage, pressage, filage, rotomoulage ou par des procédés d'enduction et de revêtement, par exemple pour l'industrie électrique et électronique, l'industrie du bâtiment, l'industrie des transports, pour les applications médicales, pour les appareils ménagers et électriques, pour les éléments de véhicules, pour des articles de consommation, des emballages, des meubles, des textiles.
